# EUROPEAN PATENT APPLICATION

(11) **EP 4 780 032 A1**
(43) Date of publication of application: **22.07.2026**
(21) Application number: 24870424.9
(22) Date of filing: 09.09.2024
(51) Int. Cl.: H04W 8/24

(54) **COMMUNICATION METHOD AND COMMUNICATION APPARATUS**

(30) Priority: 28.09.2023 CN 202311288762
(71) Applicant: HUAWEI TECHNOLOGIES CO., LTD., Shenzhen 518129 (CN)
(72) Inventor: WANG, Zhonglong, Shenzhen, Guangdong 518129 (CN); XIE, Xinqian, Shenzhen, Guangdong 518129 (CN); SHAO, Jiafeng, Shenzhen, Guangdong 518129 (CN)
(74) Representative: Isarpatent
(86) International application number: PCT/CN2024/117680
(87) International publication number: WO 2025/066879

(57) **Abstract**

This application relates to the communication field, and specifically, to a communication method and a communication apparatus. The method includes: sending first information, where the first information indicates a phase capability of a terminal device; and sending a first signal on a first resource, where the first resource is determined based on the phase capability. The method and the apparatus can enable a signal sent by the terminal device to meet a requirement of a sensing function.

## Description

This application claims priority to Chinese Patent Application No. 202311288762.1, filed with the China National Intellectual Property Administration on September 28, 2023 and entitled "COMMUNICATION METHOD AND COMMUNICATION APPARATUS", which is incorporated herein by reference in its entirety.

### TECHNICAL FIELD

This application relates to the communication field, and specifically, to a communication method and a communication apparatus.

### BACKGROUND

As communication systems evolve from the 5th generation mobile communication technology (5th generation mobile communication technology, 5G) to the 6th generation mobile communication technology (6th generation mobile communication technology, 6G), network visions such as all-domain coverage, green intelligence, and sensory interconnection emerge. Achievement of a 6G vision requires closed-loop information flow processing that includes environment sensing information obtaining, information exchange and sharing, intelligent information processing, and layer-by-layer control information distribution. Existing wireless network technologies can hardly meet emerging application requirements in the post-5G era and the 6G era. There is an urgent need to develop new network architectures that feature efficient resource utilization, differentiated applications, and intelligent adaptation, to integrate communication and sensing, that is, to implement harmonized communication and sensing (harmonized communication and sensing, HCS).

The HCS is an information processing technology that implements coordination between sensing and communication functions based on software and hardware resource sharing or information sharing. The HCS can greatly reuse communication resources and sensing resources, and implement a unified design of the communication function and the sensing function. However, the communication function and the sensing function have different requirements on signals. Existing terminal devices are generally designed for requirements of the communication function, without considering requirements of the sensing function, and therefore are not applicable to sensing scenarios.

### SUMMARY

Embodiments of this application provide a communication method, a communication apparatus, a communication system, a computer-readable storage medium, and a computer program product, to enable a signal sent by a terminal device to meet a requirement of a sensing function.

According to a first aspect, an embodiment of this application provides a communication method. The method may be performed by a terminal device or a chip used in the terminal device. The following uses an example in which the method is performed by the terminal device for description. The method includes: sending first information, where the first information indicates a phase capability of the terminal device; and sending a first signal on a first resource, where the first resource is determined based on the phase capability.

A sensing function requires that a sent signal has a stable phase value in a period of time, to implement sensing functions such as speed measurement. However, a communication function generally has no requirement on a phase value of the signal, and a communication method needs to be improved for the sensing function. Different terminal devices have different phase capabilities. If the phase capability of the terminal device is not considered for a resource for sending the signal, the signal sent by the terminal device may not be able to maintain the stable phase value. The terminal device notifies a network device of the phase capability of the terminal device, and the network device may determine and indicate the first resource based on the phase capability of the terminal device. In this way, the first resource matches the phase capability of the terminal device, and the first signal sent by the terminal device on the first resource can meet the requirement of the sensing function. In addition, the first resource matches the phase capability of the terminal device, to avoid resource waste.

Optionally, the phase capability includes: a capability of maintaining phase continuity; or a capability of maintaining a phase value of a radio frequency link unchanged; or a capability that an absolute value of a difference between a phase value of a signal sent in a first time unit and a phase value of a signal sent in a second time unit is less than or equal to a first value, where the first time unit and the second time unit belong to a first time period.

In this embodiment, "the phase value remains unchanged" may be considered as that an absolute value of a difference between phase values of any two sensing signals sent by the radio frequency link in the first time period is in an error range. The terminal device can indicate the phase capability of the terminal device in different manners, so that the network device indicates the first resource based on the phase capability of the terminal device.

Optionally, the phase capability includes duration of maintaining phase continuity.

The capability of maintaining phase continuity may be represented by the duration of maintaining phase continuity. The terminal device notifies the network device of the duration for the terminal device to maintain phase continuity, and the network device may configure the first resource for the terminal device based on the duration. In this way, phase continuity can be maintained for a plurality of signals sent by the terminal device on the first resource.

Optionally, a time span of the first resource is less than or equal to a time span of the duration.

The time span of the first resource is a time length between a start moment and an end moment of the first resource. If the time span of the first resource exceeds the time span of the duration, phase continuity cannot be maintained for a signal sent by the terminal device in a time period other than the duration. As a result, the sent signal cannot meet the requirement of the sensing function. Therefore, the time span of the first resource is less than or equal to the time span of the duration, to avoid resource waste.

Optionally, the first information includes a first field, and the first field indicates a quantity of at least one time unit included in the duration.

The first field indicates the quantity of at least one time unit, so that the terminal device can flexibly indicate the duration of maintaining phase continuity.

Optionally, the phase capability includes a capability of maintaining phase continuity after transmit power changes or a transmit power level changes, and/or a transmit power range for maintaining phase continuity.

In embodiments of this application, the "capability of maintaining phase continuity after the transmit power changes or the transmit power level changes" can be replaced with the following expression:
in the first time period, when the transmit power changes or the transmit power level changes, phase values of a plurality of sensing signals sent by the terminal device are the same (or an absolute value of a difference between phase values of any two sensing signals in the plurality of sent sensing signals is less than or equal to the first value, or phase continuity can be maintained for the plurality of sent sensing signals).

That the transmit power changes or the transmit power level changes may affect phase continuity. If the terminal device can maintain phase continuity after the transmit power changes or the transmit power level changes, or if the terminal device can maintain phase continuity in some transmit power ranges, the terminal device may notify the network device of this capability of the terminal device. The network device may configure or schedule the matched first resource for the terminal device based on this capability of the terminal device, and then indicate the first resource to the terminal device. The terminal device may adjust the transmit power or the transmit power level in a time period between the start moment and the end moment of the first resource, where transmit power before and after adjustment is in the transmit power range for maintaining phase continuity. In this way, phase continuity can be maintained for the plurality of signals sent by the terminal device on the first resource, and the plurality of signals can further flexibly adapt to different communication scenarios.

Optionally, the phase capability includes an incapability of maintaining phase continuity after transmit power changes or a transmit power level changes; and the transmit power or the transmit power level of the terminal device remains unchanged in a time period between the start moment and the end moment of the first resource.

In embodiments of this application, the "incapability of maintaining phase continuity after the transmit power changes or the transmit power level changes" can be replaced with the following expression:
in the first time period, when the transmit power changes or the transmit power level changes, phase values of a plurality of sensing signals sent by the terminal device are different (or an absolute value of a difference between phase values of two sensing signals in the plurality of sent sensing signals is greater than the first value, or phase continuity cannot be maintained for the plurality of sent sensing signals).

That the transmit power changes or the transmit power level changes may affect phase continuity. If the terminal device cannot maintain phase continuity after the transmit power changes or the transmit power level changes, the terminal device may notify the network device of this capability of the terminal device. The network device may configure or schedule the matched first resource for the terminal device based on this capability of the terminal device, and then indicate the first resource to the terminal device. The terminal device may maintain the transmit power or the transmit power level unchanged in the time period between the start moment and the end moment of the first resource. In this way, phase continuity can be maintained for the plurality of signals sent by the terminal device on the first resource.

Optionally, the phase capability includes a capability of maintaining phase continuity after a signal is received.

In embodiments of this application, the "capability of maintaining phase continuity after the signal is received" can be replaced with the following expression:
in the first time period, when the signal is received during sending of a plurality of sensing signals, phase values of the plurality of sensing signals sent by the terminal device are the same (or an absolute value of a difference between phase values of any two sensing signals in the plurality of sent sensing signals is less than or equal to the first value, or phase continuity can be maintained for the plurality of sent sensing signals).

Receiving of the signal may affect phase continuity of the sent signal. If the terminal device can maintain phase continuity after receiving the signal, the terminal device may notify the network device of this capability of the terminal device. The network device may indicate the matched first resource to the terminal device based on this capability of the terminal device. The terminal device may receive the signal in the time period between the start moment and the end moment of the first resource. In this way, phase continuity can be maintained for the plurality of signals sent by the terminal device on the first resource, and the plurality of signals can further flexibly adapt to different communication scenarios.

Optionally, the phase capability includes an incapability of maintaining phase continuity after a signal is received; and the terminal device is capable of sending only a signal in the time period between the start moment and the end moment of the first resource.

In embodiments of this application, the "incapability of maintaining phase continuity after the signal is received" can be replaced with the following expression:
in the first time period, when the signal is received during sending of a plurality of sensing signals, phase values of the plurality of sensing signals sent by the terminal device are different (or an absolute value of a difference between phase values of two sensing signals in the plurality of sent sensing signals is greater than the first value, or phase continuity cannot be maintained for the plurality of sent sensing signals).

Receiving of the signal may affect phase continuity of the sent signal. If the terminal device cannot maintain phase continuity after receiving the signal, the terminal device may notify the network device of this capability of the terminal device. The network device may indicate the matched first resource to the terminal device based on this capability of the terminal device. The terminal device may send only the signal in the time period between the start moment and the end moment of the first resource. In this way, phase continuity can be maintained for the plurality of signals sent by the terminal device on the first resource.

Optionally, before sending the first signal on the first resource, the method further includes: receiving second information, where the second information indicates the first resource.

Optionally, the first signal is used for sensing.

In addition to being used for sensing, the first signal may be further used for communication. A function of the first signal other than sensing is not limited in embodiments of this application.

According to a second aspect, an embodiment of this application provides a communication method. The method may be performed by a network device or a chip used in the network device. The following uses an example in which the method is performed by the network device for description. The method includes: receiving first information, where the first information indicates a phase capability of a terminal device; determining a first resource based on the phase capability; and receiving a first signal on the first resource.

A sensing function requires that a sent signal has a stable phase value in a period of time, to implement sensing functions such as speed measurement. However, a communication function generally has no requirement on a phase value of the signal, and a communication method needs to be improved for the sensing function. Different terminal devices have different phase capabilities. If the phase capability of the terminal device is not considered for a resource for sending the signal, the signal sent by the terminal device may not be able to maintain the stable phase value. The terminal device notifies the network device of the phase capability of the terminal device, and the network device may determine and indicate the first resource based on the phase capability of the terminal device. In this way, the first resource matches the phase capability of the terminal device, and the first signal sent by the terminal device on the first resource can meet the requirement of the sensing function. In addition, the first resource matches the phase capability of the terminal device, to avoid resource waste.

Optionally, the phase capability includes: a capability of maintaining phase continuity; or a capability of maintaining a phase value of a radio frequency link unchanged; or a capability of maintaining an absolute value of a difference between a phase value of a signal sent in a first time unit and a phase value of a signal sent in a second time unit less than or equal to a first value, where the first time unit and the second time unit belong to a first time period.

In this embodiment, "the phase value remains unchanged" may be considered as that an absolute value of a difference between phase values of any two sensing signals sent by the radio frequency link in the first time period is in an error range. The terminal device can indicate the phase capability of the terminal device in different manners, and the network device can indicate the first resource based on the phase capability of the terminal device.

Optionally, the phase capability includes duration of maintaining phase continuity.

The capability of maintaining phase continuity may be represented by the duration of maintaining phase continuity. The terminal device notifies the network device of the duration for the terminal device to maintain phase continuity, and the network device may indicate the first resource for the terminal device based on the duration. In this way, phase continuity can be maintained for a plurality of signals sent by the terminal device on the first resource.

Optionally, a time span of the first resource is less than or equal to a time span of the duration.

The time span of the first resource is a time length between a start moment and an end moment of the first resource. If the time span of the first resource exceeds the time span of the duration, phase continuity cannot be maintained for a signal sent by the terminal device in a time period other than the duration. As a result, the sent signal cannot meet the requirement of the sensing function. Therefore, the time span of the first resource is less than or equal to the time span of the duration, to avoid resource waste.

Optionally, the first information includes a first field, and the first field indicates a quantity of at least one time unit included in the duration.

The first field indicates the quantity of at least one time unit, so that the terminal device can flexibly indicate the duration of maintaining phase continuity.

Optionally, the phase capability includes a capability of maintaining phase continuity after transmit power changes or a transmit power level changes, and/or a transmit power range for maintaining phase continuity.

That the transmit power changes or the transmit power level changes may affect phase continuity. If the terminal device can maintain phase continuity after the transmit power changes or the transmit power level changes, or if the terminal device can maintain phase continuity in some transmit power ranges, the terminal device may notify the network device of this capability of the terminal device. The network device may configure or schedule the matched first resource for the terminal device based on this capability of the terminal device, and then indicate the first resource to the terminal device. The terminal device may adjust the transmit power or the transmit power level in a time period between the start moment and the end moment of the first resource, where transmit power before and after adjustment is in the transmit power range for maintaining phase continuity. In this way, phase continuity can be maintained for the plurality of signals sent by the terminal device on the first resource, and the plurality of signals can further flexibly adapt to different communication scenarios.

Optionally, the phase capability includes an incapability of maintaining phase continuity after transmit power changes or a transmit power level changes; and the transmit power or the transmit power level of the terminal device remains unchanged in a time period between the start moment and the end moment of the first resource.

That the transmit power changes or the transmit power level changes may affect phase continuity. If the terminal device cannot maintain phase continuity after the transmit power changes or the transmit power level changes, the terminal device may notify the network device of this capability of the terminal device. The network device may configure or schedule the matched first resource for the terminal device based on this capability of the terminal device, and then indicate the first resource to the terminal device. The terminal device may maintain the transmit power or the transmit power level unchanged in the time period between the start moment and the end moment of the first resource. In this way, phase continuity can be maintained for the plurality of signals sent by the terminal device on the first resource.

Optionally, the phase capability includes a capability of maintaining phase continuity after a signal is received.

Receiving of the signal may affect phase continuity of the sent signal. If the terminal device can maintain phase continuity after receiving the signal, the terminal device may notify the network device of this capability of the terminal device. The network device may indicate the matched first resource to the terminal device based on this capability of the terminal device. The terminal device may receive the signal in the time period between the start moment and the end moment of the first resource. In this way, phase continuity can be maintained for the plurality of signals sent by the terminal device on the first resource, and the plurality of signals can further flexibly adapt to different communication scenarios.

Optionally, the phase capability includes an incapability of maintaining phase continuity after a signal is received; and the terminal device is capable of sending only a signal in the time period between the start moment and the end moment of the first resource.

Receiving of the signal may affect phase continuity of the sent signal. If the terminal device cannot maintain phase continuity after receiving the signal, the terminal device may notify the network device of this capability of the terminal device. The network device may indicate the matched first resource to the terminal device based on this capability of the terminal device. The terminal device may send only the signal in the time period between the start moment and the end moment of the first resource. In this way, phase continuity can be maintained for the plurality of signals sent by the terminal device on the first resource.

Optionally, before receiving the first signal on the first resource, the method further includes: sending second information, where the second information indicates the first resource.

Optionally, the first signal is used for sensing.

In addition to being used for sensing, the first signal may be further used for communication. A function of the first signal other than sensing is not limited in embodiments of this application.

According to a third aspect, an embodiment of this application provides a communication method. The method may be performed by a terminal device or a chip used in the terminal device. The following uses an example in which the method is performed by the terminal device for description. The method includes: sending first information, where the first information indicates a capability that is of the terminal device and that is of maintaining phase continuity; and sending a first signal on a first resource, where the first resource is determined based on the capability of maintaining phase continuity.

Optionally, the capability of maintaining phase continuity includes duration of maintaining phase continuity.

Optionally, a time span of the first resource is less than or equal to a time span of the duration.

Optionally, the first information includes a first field, and the first field indicates a quantity of at least one time unit included in the duration.

Optionally, the capability of maintaining phase continuity includes a capability of maintaining phase continuity after transmit power changes or a transmit power level changes, and/or a transmit power range for maintaining phase continuity.

Optionally, the capability of maintaining phase continuity includes an incapability of maintaining phase continuity after transmit power changes or a transmit power level changes; and the transmit power or the transmit power level of the terminal device remains unchanged in a time period between a start moment and an end moment of the first resource.

Optionally, the capability of maintaining phase continuity includes a capability of maintaining phase continuity after a signal is received.

Optionally, the capability of maintaining phase continuity includes an incapability of maintaining phase continuity after a signal is received; and the terminal device is capable of sending only a signal in a time period between a start moment and an end moment of the first resource.

Optionally, before sending the first signal on the first resource, the method further includes: receiving second information, where the second information indicates the first resource.

Optionally, the first signal is used for sensing.

For beneficial effect of embodiments in the third aspect, refer to beneficial effect of similar solutions in the first aspect. Details are not described again.

According to a fourth aspect, an embodiment of this application provides a communication method. The method may be performed by a network device or a chip used in the network device. The following uses an example in which the method is performed by the network device for description. The method includes: receiving first information, where the first information indicates a capability that is of a terminal device and that is of maintaining phase continuity; determining a first resource based on the capability of maintaining phase continuity; and receiving a first signal on the first resource.

Optionally, the capability of maintaining phase continuity includes duration of maintaining phase continuity.

Optionally, a time span of the first resource is less than or equal to a time span of the duration.

Optionally, the first information includes a first field, and the first field indicates a quantity of at least one time unit included in the duration.

Optionally, the capability of maintaining phase continuity includes a capability of maintaining phase continuity after transmit power changes or a transmit power level changes, and/or a transmit power range for maintaining phase continuity.

Optionally, the capability of maintaining phase continuity includes an incapability of maintaining phase continuity after transmit power changes or a transmit power level changes; and the transmit power or the transmit power level of the terminal device remains unchanged in a time period between a start moment and an end moment of the first resource.

Optionally, the capability of maintaining phase continuity includes a capability of maintaining phase continuity after a signal is received.

Optionally, the capability of maintaining phase continuity includes an incapability of maintaining phase continuity after a signal is received; and the terminal device is capable of sending only a signal in a time period between a start moment and an end moment of the first resource.

Optionally, before receiving the first signal on the first resource, the method further includes: sending second information, where the second information indicates the first resource.

Optionally, the first signal is used for sensing.

For beneficial effect of embodiments in the fourth aspect, refer to beneficial effect of similar solutions in the second aspect. Details are not described again.

According to a fifth aspect, an embodiment of this application provides a communication apparatus. The communication apparatus may include a processing unit and a transceiver unit, configured to perform the method according to any one of the first aspect and the optional implementations of the first aspect or the method according to any one of the third aspect and the optional implementations of the third aspect. The transceiver unit is a sending unit when performing a sending step, and the transceiver unit is a receiving unit when performing a receiving step.

According to a sixth aspect, an embodiment of this application provides a communication apparatus. The communication apparatus may be a terminal device, or may be a chip used in the terminal device. The communication apparatus may include a processor, configured to perform the method according to any one of the first aspect and the optional implementations of the first aspect or the method according to any one of the third aspect and the optional implementations of the third aspect.

Optionally, the communication apparatus may further include a transceiver. When the communication apparatus is a terminal device, the transceiver may be a transceiver circuit, an antenna, or the like. When the communication apparatus is a chip used in the terminal device, the transceiver may be an input/output interface, a pin, a circuit, or the like.

Optionally, the communication apparatus may further include a memory. The memory is configured to store instructions. The processor executes the instructions stored in the memory, to enable the communication apparatus to perform the method according to any one of the first aspect and the optional implementations of the first aspect or the method according to any one of the third aspect and the optional implementations of the third aspect. When the communication apparatus is a terminal device, the memory may be a read-only memory, a random access memory, or the like. When the communication apparatus is a chip used in the terminal device, the memory may be a register, a cache, or the like.

According to a seventh aspect, an embodiment of this application provides a communication apparatus. The communication apparatus may include a processing unit and a transceiver unit, configured to perform the method according to any one of the second aspect and the optional implementations of the second aspect or the method according to any one of the fourth aspect and the optional implementations of the fourth aspect. The transceiver unit is a sending unit when performing a sending step, and the transceiver unit is a receiving unit when performing a receiving step.

According to an eighth aspect, an embodiment of this application provides a communication apparatus. The communication apparatus may be a network device, or may be a chip used in the network device. The communication apparatus may include a processor, configured to perform the method according to any one of the second aspect and the optional implementations of the second aspect or the method according to any one of the fourth aspect and the optional implementations of the fourth aspect.

Optionally, the communication apparatus may further include a transceiver. When the communication apparatus is a network device, the transceiver may be a transceiver circuit, an antenna, or the like. When the communication apparatus is a chip used in the network device, the transceiver may be an input/output interface, a pin, a circuit, or the like.

Optionally, the communication apparatus may further include a memory. The memory is configured to store instructions. The processor executes the instructions stored in the memory, to enable the communication apparatus to perform the method according to any one of the second aspect and the optional implementations of the second aspect or the method according to any one of the fourth aspect and the optional implementations of the fourth aspect. When the communication apparatus is a network device, the memory may be a read-only memory, a random access memory, or the like. When the communication apparatus is a chip used in the network device, the memory may be a register, a cache, or the like.

According to a ninth aspect, an embodiment of this application provides a computer-readable storage medium. The computer-readable storage medium stores a computer program. When the computer program is executed on a computer, the computer is enabled to perform the method according to any one of the first aspect and the optional implementations of the first aspect or the method according to any one of the third aspect and the optional implementations of the third aspect.

According to a tenth aspect, an embodiment of this application provides a computer-readable storage medium. The computer-readable storage medium stores a computer program. When the computer program is executed on a computer, the computer is enabled to perform the method according to any one of the second aspect and the optional implementations of the second aspect or the method according to any one of the fourth aspect and the optional implementations of the fourth aspect.

According to an eleventh aspect, an embodiment of this application provides a computer program product. The computer program product includes computer program code or computer program instructions. When the computer program code or the computer program instructions are run on a communication apparatus, the communication apparatus is enabled to perform the method according to any one of the first aspect and the optional implementations of the first aspect or the method according to any one of the third aspect and the optional implementations of the third aspect.

According to a twelfth aspect, an embodiment of this application provides a computer program product. The computer program product includes computer program code or computer program instructions. When the computer program code or the computer program instructions are run on a communication apparatus, the communication apparatus is enabled to perform the method according to any one of the second aspect and the optional implementations of the second aspect or the method according to any one of the fourth aspect and the optional implementations of the fourth aspect.

According to a thirteenth aspect, an embodiment of this application provides a communication system. The communication system includes the communication apparatus according to the fifth aspect and the communication apparatus according to the seventh aspect, or the communication apparatus according to the sixth aspect and the communication apparatus according to the eighth aspect.

### BRIEF DESCRIPTION OF DRAWINGS

FIG. 1 is a diagram of a communication system applicable to this application;
FIG. 2 is a diagram of a protocol stack applicable to this application;
FIG. 3 is a diagram of a monostatic system according to an embodiment of this application;
FIG. 4 is a diagram of another monostatic system according to an embodiment of this application;
FIG. 5 is a diagram of a bistatic system according to an embodiment of this application;
FIG. 6 is a diagram of another bistatic system according to an embodiment of this application;
FIG. 7 is a diagram of another bistatic system according to an embodiment of this application;
FIG. 8 is a diagram of a time domain resource used to send a sensing signal according to an embodiment of this application;
FIG. 9 is a diagram of a communication method according to an embodiment of this application;
FIG. 10 is a diagram of duration of maintaining phase continuity according to an embodiment of this application;
FIG. 11 is a diagram of a correspondence between transmit power and a power amplifier according to an embodiment of this application;
FIG. 12 is a diagram of a sensing resource according to an embodiment of this application;
FIG. 13 is a diagram of another sensing resource according to an embodiment of this application;
FIG. 14 is a diagram of another sensing resource according to an embodiment of this application;
FIG. 15 is a diagram of another sensing resource according to an embodiment of this application;
FIG. 16 is a diagram of a communication apparatus according to an embodiment of this application;
FIG. 17 is a diagram of another communication apparatus according to an embodiment of this application;
FIG. 18 is a diagram of a terminal device according to an embodiment of this application; and
FIG. 19 is a diagram of a network device according to an embodiment of this application.

### DESCRIPTION OF EMBODIMENTS

With reference to accompanying drawings, the following describes technical solutions in this application.

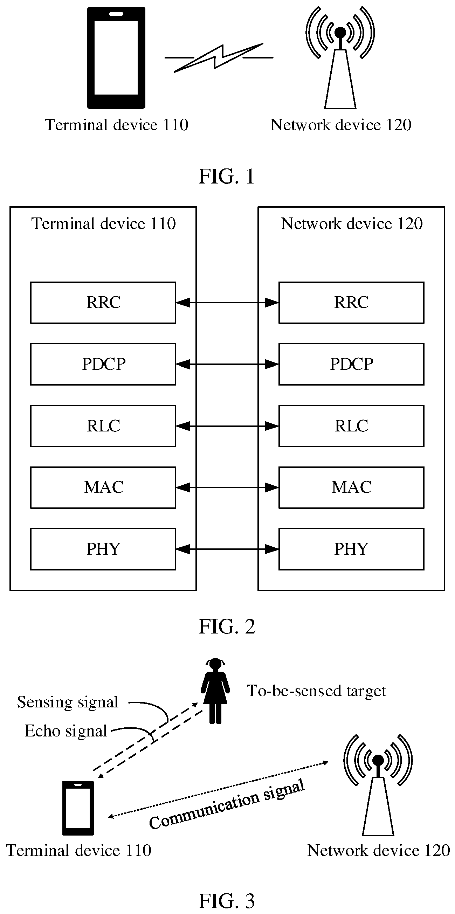

FIG. 1 is a diagram of a communication system applicable to this application. The communication system includes a terminal device 110 and a network device 120. The following separately describes the parts of the communication system.

### 1. Terminal device 110

In this embodiment of this application, the terminal device 110 may be a device that provides a voice and/or data for a user, for example, a handheld device or a vehicle-mounted device that has a wireless connection function. The terminal device 110 may also be referred to as user equipment (user equipment, UE), a terminal, an access station, a UE station, a remote station, a wireless communication device, or a user apparatus.

For example, the terminal device 110 may be a mobile phone (mobile phone), a tablet computer (Pad), a computer with a wireless transceiver function, a virtual reality (virtual reality, VR) terminal, an augmented reality (augmented reality, AR) terminal, a wireless terminal in industrial control (industrial control), a vehicle, a wireless communication module in the vehicle, a telematics box (telematics box, T-box), a road side unit (road site unit, RSU), a wireless terminal in uncrewed driving, a smart speaker in an internet of things (internet of things, IoT), a wireless terminal device in telemedicine (remote medical), a wireless terminal device in a smart grid (smart grid), a wireless terminal device in transportation safety (transportation safety), a wireless terminal device in a smart city (smart city), or a wireless terminal device in a smart home (smart home). This is not limited in embodiments of this application.

By way of example and not limitation, in this embodiment of this application, the terminal device 110 may alternatively be a wearable device. The wearable device may also be referred to as a wearable intelligent device, and is a general term of wearable devices that are intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized electronic devices that can implement complete or partial functions without depending on smartphones, for example, smart watches or smart glasses, or include electronic devices that are dedicated to only one type of application function and that need to be used together with other devices such as smartphones, for example, various smart bands or smart jewelry used for measuring physical signs.

The terminal device 110 may alternatively be a vehicle-to-everything (vehicle-to-everything, V2X) device, for example, a smart car (smart car or intelligent car), a digital car (digital car), an uncrewed car (uncrewed car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), or a new energy vehicle (new energy vehicle). If the various terminal devices described above are located in a vehicle (for example, placed in the vehicle or mounted in the vehicle), the terminal devices may be all considered as vehicle-mounted terminal devices. For example, the vehicle-mounted terminal device is also referred to as an on-board unit (on-board unit, OBU).

The terminal device 110 in this application may alternatively be a vehicle-mounted module, a vehicle-mounted assembly, a vehicle-mounted component, a vehicle-mounted chip, or an on-board unit that is built in a vehicle as one or more components or units. The vehicle may implement a method in this application via the built-in vehicle-mounted module, vehicle-mounted assembly, vehicle-mounted component, vehicle-mounted chip, or on-board unit.

In addition, in this embodiment of this application, the terminal device 110 may alternatively be a device in a future evolved public land mobile communication network (public land mobile network, PLMN). For example, the terminal device 110 may be a terminal device in a 6th generation mobile communication technology (6th generation mobile communication technology, 6G) system. A specific type of the terminal device 110 is not limited in embodiments of this application.

### 2. Network device 120

The network device 120 is a device that provides a wireless communication function for a terminal device, and is responsible for a function related to an air interface (referred to as an "air interface" for short). The network device may also be referred to as a network apparatus or a radio access network (radio access network, RAN) device. The network device includes but is not limited to a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, a wireless fidelity (wireless fidelity, Wi-Fi) system, a long range radio (long range radio, LoRa) system, or an access node in an internet of vehicles system. The RAN device may also be a module or a unit that completes a part of functions of a base station, for example, may be a central unit (central unit, CU), may be a distributed unit (distributed unit, DU), or may be a radio unit (radio unit, RU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete functions of a part of physical layers or all physical layers. For specific descriptions of the foregoing protocol layers, refer to related technical specifications in the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings thereof. For example, in an open radio access network (open radio access network, ORAN) system, the CU may alternatively be referred to as an O-CU (open CU), the DU may alternatively be referred to as an O-DU (open DU), and the RU may alternatively be referred to as an O-RU (open RU). Any one of the CU (or a CU-CP or a CU-UP), the DU, and the RU in this application may be implemented by a software module, a hardware module, or a combination of the software module and the hardware module. A radio access network device may be a macro base station, a micro base station, or an indoor station, or may be a relay node, a donor node, or the like. The network device 120 in this embodiment of this application may be any one of the foregoing devices or an apparatus in the device. In addition, a specific technology and a specific device form used by the network device 120 are not limited in embodiments of this application. For ease of description, the network device 120 is used as an abbreviation of the radio access network device, and the base station is used as an example of the radio access network device.

A plurality of network devices in a communication system may be base stations of a same type, or may be base stations of different types. The base station may communicate with the terminal device 110, or may communicate with the terminal device 110 via a relay station. The network device 120 in this application may alternatively be a device having a sensing function. The device may transmit a sensing signal, and receive and process a signal reflected by a target in an environment. In this embodiment of this application, a communication apparatus configured to implement a function of the network device 120 may be a network device, may be a network device that has a part of functions of the base station, or may be an apparatus that can support a network device in implementing the function, for example, a chip system. The apparatus may be installed in the network device.

The network device 120 may alternatively be a base station corresponding to a small cell (small cell). The small cell herein may include a metro cell (metro cell), a micro cell (micro cell), a pico cell (pico cell), or a femto cell (femto cell). A specific type of the network device is not limited in embodiments of this application.

In embodiments of this application, the network device 120 may also be referred to as a cell, and the two may be replaced with each other. For brevity, details are not described subsequently.

The following describes a protocol stack applicable to this application.

A protocol stack between the terminal device 110 and the network device 120 is shown in FIG. 2. The protocol stack is mainly a protocol stack of an access stratum. The access stratum may be further divided into a radio resource control (radio resource control, RRC) layer, a packet data convergence protocol (packet data convergence protocol, PDCP) layer, a radio link control (radio link control, RLC) layer, a medium access control (medium access control, MAC) layer, and a physical (physical, PHY) layer.

The following uses uplink transmission as an example to describe a working procedure of the protocol stack.
(1) Main functions of the RRC layer include system information, admission control, security management, measurement and reporting, and handover and mobility. Control plane data related to these functions is generated at a non-access stratum (non-access stratum, NAS). The RRC layer is further responsible for management of a radio resource for transmitting a NAS protocol data unit (protocol data unit, PDU). After arriving at the RRC layer, the NAS PDU is processed as an RRC service data unit (service data unit, SDU), to generate an RRC PDU. Control plane data (for example, an RRC reconfiguration message) generated at the RRC layer is also packed into an RRC PDU.
(2) Main functions of the PDCP layer include transmission of user plane and control plane data, maintenance of a PDCP sequence number, routing and duplication, encryption/decryption and integrity protection, reordering, out-of-order delivery, and duplicate discarding. After arriving at the PDCP layer, the RRC PDU is processed as a PDCP SDU, to generate a PDCP PDU.
(3) Main functions of the RLC layer include error detection and correction, segmentation and reassembly, re-segmentation, and duplicate detection. After arriving at the RLC layer, the PDCP PDU is processed as an RLC SDU, to generate an RLC PDU.
(4) Main functions of the MAC layer include mapping between logical channels and transport channels, multiplexing/demultiplexing, scheduling, hybrid automatic repeat request (hybrid automatic repeat request, HARQ), and logical channel prioritization. After arriving at the MAC layer, the RLC PDU is processed as a MAC SDU, to generate a MAC sub-PDU (sub-PDU). A plurality of MAC sub-PDUs are concatenated to generate a MAC PDU.
(5) Main functions of the PHY layer include coding, modulation, and multiple-input multiple-output (multiple-input multiple-output, MIMO). After arriving at the PHY layer, the MAC PDU is sent on a corresponding time-frequency resource.

It can be learned from the foregoing descriptions that data transmitted between same protocol layers may be referred to as an SDU, and data transmitted between adjacent protocol layers may be referred to as a PDU. For a protocol layer, data processed by the protocol layer may be referred to as an SDU, and data output by the protocol layer may be referred to as a PDU.

For example, data processed by the RRC layer of the terminal device 110 is an RRC SDU, and the RRC layer encapsulates the RRC SDU with protocol control information (protocol control information, PCI) into an RRC PDU. The RRC PDU is processed by the PDCP layer, the RLC layer, the MAC layer, and the PHY layer, and then is transmitted to the network device 120 by using a radio signal. Information carried by the radio signal that arrives at the network device 120 is sequentially processed by the PHY layer, the MAC layer, the RLC layer, and the PDCP layer, and arrives at the RRC layer in a form of the RRC PDU. The RRC layer decapsulates the RRC PDU, removes the PCI, and restores the RRC SDU.

If a data amount of one SDU is large, the terminal device 110 may divide the SDU into a plurality of segments, and encapsulate the plurality of segments into a plurality of PDUs for sending. The network device 120 decapsulates the plurality of PDUs and reassembles the plurality of PDUs into the SDU. If data amounts of a plurality of SDUs are small, the terminal device 110 may combine the plurality of SDUs, encapsulate the plurality of SDUs into one PDU for sending. The network device 120 decapsulates the PDU and separates the plurality of SDUs.

For ease of understanding of the technical solutions in this application, concepts in this application are first briefly described.

### (1) Harmonized communication and sensing

The term "sensing (sensing)" means that an electromagnetic wave is emitted into space, and the electromagnetic wave reflected by an object in the space is received, so that information about the object, for example, parameters such as a location, a direction, a height, a speed, a size, and a trajectory, may be obtained through calculation, and/or internal and external shapes and a structure of the object may be detected. Transmission, an echo, reflection, and scattering of the electromagnetic wave may be explored, to sense and better understand the physical world. Sensing may also be referred to as detection.

Table 1 shows examples of some sensing application scenarios provided in embodiments of this application.

**Table 1**

| Infrastructure | Autonomous driving | Portable device |
|---|---|---|
| Posture recognition | Posture recognition | Posture recognition |
| Security check/personnel identification | In-vehicle behavior sensing (drunk driving/attention) | Health detection |
| Track management | Anti-collision sensing | Riding helmet |
| Intrusion/threat detection | Parking sensing | Life detection |
| Imaging/environment reconstruction/point cloud | Pedestrian detection | Basic installation inspection |
| ... | Traffic management | Lossless detection |
| | Agricultural production | Life science (respiration/motion) |
| | Robot | ... |
| | Uncrewed aerial vehicle | |
| | ... | |

As shown in Table 1, a sensing technology has three typical application scenarios: infrastructure, autonomous driving, and portable device. Different application scenarios have sensing services of different types, and the sensing services of different types correspond to different service requirements.

In the infrastructure scenario, a sensing function may be used to perform tasks such as security check and track management at an airport, perform tasks such as personnel counting and positioning at a factory, and perform tasks such as imaging and environment reconstruction in a building.

In the autonomous driving scenario, an autonomous driving device having the sensing function may be used to perform tasks such as posture recognition, in-vehicle behavior sensing, anti-collision sensing, traffic management, and pedestrian detection.

In the portable device scenario, an electronic device having the sensing function may be used to perform health detection, a riding helmet having the sensing function may be used to perform safety prediction, and a detector having the sensing function may be used to perform life detection.

The foregoing sensing is widely defined as understanding and detecting the object and a signal in the space by using the electromagnetic wave, and may include meanings such as positioning, a radar, imaging, action recognition, object identification, and environment reconstruction.

An electromagnetic signal used for communication and an electromagnetic signal used for sensing are harmonized for use, to form an integrated communication and sensing system. In the integrated communication and sensing system, a communication node and a sensing node may be harmonized with each other (referred to as an HCS node below), and there may be HCS nodes of various harmonization types. The HCS node means a harmonization design of the communication node and the sensing node, and may implement an efficient design of communication and sensing by sharing a part of resources such as a hardware resource, a computing resource, a space resource, a time resource, and a frequency resource, to achieve an objective of reducing overheads such as a power loss, a site address, and costs.

For example, Table 2 shows examples of different harmonization types of HCS nodes provided in this embodiment of this application.

**Table 2**

| | Harmonization type 1 | Harmonization type 2 | Harmonization type 3 |
|---|---|---|---|
| Shared content | Baseband hardware | Baseband hardware | Baseband hardware |
| | Radio frequency hardware | Radio frequency hardware | |
| | Time resource | | |
| | Spectrum resource | | |
| Exclusive content | Data processing | Data processing | Data processing |
| | | Time resource | Time resource |
| | | Spectrum resource | Spectrum resource |
| | | | Radio frequency hardware |

As shown in Table 2, there may be three different harmonization types of HCS nodes.

In the first harmonization type, the HCS node may share a hardware resource, a radio frequency resource, a baseband resource, a time resource, a spectrum resource, and the like, but a communication signal and a sensing signal are separately processed. A joint waveform is used as an example. Advantages of this harmonization type include an ability to simultaneously transmit the communication signal and the sensing signal, and strong interference immunity.

In the second harmonization type, the HCS node may share a radio frequency resource and a baseband resource. In this case, in addition to separate processing of a communication signal and a sensing signal, the communication signal and the sensing signal may be separately transmitted in a time division multiplexing manner or a frequency division multiplexing manner. A time division multiplexing waveform is used as an example. Advantages of this harmonization type include strong independence between the communication signal and the sensing signal, and slight interference between a communication node and a sensing node.

In the third harmonization type, the HCS node may share a baseband resource, and a communication signal and a sensing signal are transmitted on respective resources in space domain, time domain, and frequency domain.

It should be understood that there may be another different harmonization type. This is not limited in embodiments of this application.

### (2) Harmonized communication and sensing system

Based on whether a transmit end and a receive end of a sensing signal are co-sited or inter-sited, the harmonized communication and sensing system may be classified into a monostatic (monostatic) system, a bistatic (bistatic) system, and a multistatic (multistatic) system. The multistatic system is generally a hybrid system including a monostatic system and a bistatic system. Two typical harmonized communication and sensing systems are shown in FIG. 3 to FIG. 7.

FIG. 3 is a diagram of a monostatic system according to an embodiment of this application. As shown in FIG. 3, a terminal device 110 establishes a communication connection to a network device 120. The terminal device 110 may send uplink data to the network device 120. The network device 120 may send downlink data to the terminal device 110. A signal between the terminal device 110 and the network device 120 may be referred to as a communication signal. The network device 120 may indicate or configure a radio resource for the terminal device 110 by using the communication signal. The radio resource is used for sensing and/or communication. In the monostatic system shown in FIG. 3, the terminal device 110 is used as an HCS node, further has a sensing capability, and may further send a sensing signal when performing communication, to sense a surrounding environment. For example, the terminal device 110 may send the sensing signal to the surrounding environment. After the sensing signal is reflected by a to-be-sensed target in the environment, the terminal device 110 receives an echo signal reflected by the to-be-sensed target. In this way, the terminal device 110 can perform sensing measurement on the echo signal, to obtain a sensing result. For example, the terminal device 110 may determine information such as a distance between the to-be-sensed target and the terminal device 110 and a speed of the to-be-sensed target.

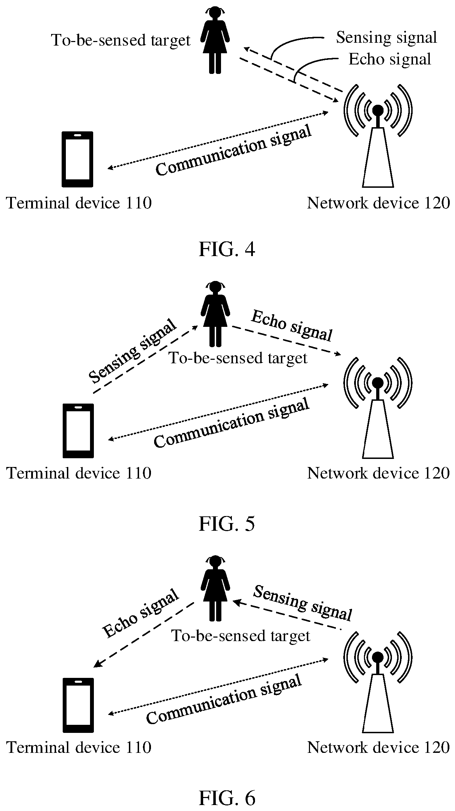

FIG. 4 is a diagram of another monostatic system according to an embodiment of this application. As shown in FIG. 4, a terminal device 110 establishes a communication connection to a network device 120. The terminal device 110 may send uplink data to the network device 120. The network device 120 may send downlink data to the terminal device 110. A signal between the terminal device 110 and the network device 120 may be referred to as a communication signal. In the monostatic system shown in FIG. 4, the network device 120 is used as an HCS node, has a sensing capability, and may further send a sensing signal when performing communication, to sense a surrounding environment. For example, the network device 120 may send the sensing signal to the surrounding environment. After the sensing signal is reflected by a to-be-sensed target in the environment, the network device 120 receives an echo signal reflected by the to-be-sensed target. In this way, the network device 120 can perform sensing measurement on the echo signal, to obtain a sensing result. For example, the network device 120 may determine information such as a distance between the to-be-sensed target and the network device 120 and a speed of the to-be-sensed target.

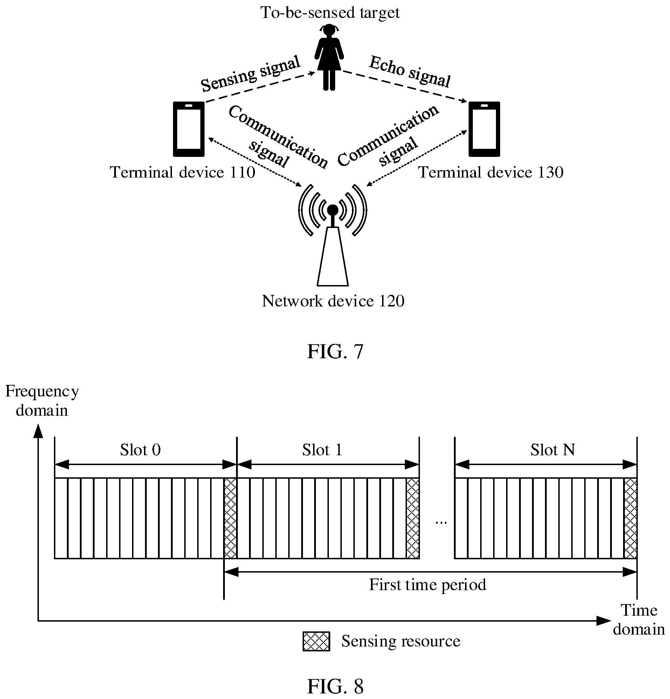

FIG. 5 is a diagram of a bistatic system according to an embodiment of this application. Different from the monostatic systems shown in FIG. 3 and FIG. 4, in the bistatic systems shown in FIG. 5 and subsequently shown in FIG. 6 and FIG. 7, a device that sends a sensing signal and a device that receives an echo signal reflected by a to-be-sensed target are two different devices. In other words, a device A sends the sensing signal, and after the sensing signal is reflected by the to-be-sensed target, a device B receives the echo signal and performs sensing measurement on the echo signal, to obtain a sensing result.

As shown in FIG. 5, a terminal device 110 establishes a communication connection to a network device 120. The network device 120 may indicate or configure a radio resource for the terminal device 110 by using a communication signal. The radio resource is used for sensing and/or communication. The terminal device 110 is used as an HCS node, has a sensing capability, and may further send the sensing signal when performing communication, to sense a surrounding environment. After the sensing signal sent by the terminal device 110 is reflected by the to-be-sensed target in the environment, the network device 120 receives the echo signal reflected by the to-be-sensed target, and then the network device 120 performs sensing measurement on the echo signal, to obtain a sensing result. For example, the network device 120 may determine information such as a location of the to-be-sensed target and a speed of the to-be-sensed target.

FIG. 6 is a diagram of another bistatic system according to an embodiment of this application. In the bistatic system shown in FIG. 6, a network device 120 is used as an HCS node, has a sensing capability, and may further send the sensing signal when performing communication, to sense a surrounding environment. After the sensing signal sent by the network device 120 is reflected by the to-be-sensed target in the environment, the terminal device 110 receives the echo signal reflected by the to-be-sensed target, and then the terminal device 110 performs sensing measurement on the echo signal, to obtain a sensing result. For example, the terminal device 110 may determine information such as a location of the to-be-sensed target and a speed of the to-be-sensed target.

FIG. 7 is a diagram of another bistatic system according to an embodiment of this application. As shown in FIG. 7, a terminal device 110 establishes a wireless link connection to a network device 120. The terminal device 110 may send uplink data to the network device 120. The network device 120 may send downlink data to the terminal device 110. A signal between the terminal device 110 and the network device 120 may be referred to as a communication signal. The network device 120 may indicate or configure a radio resource for the terminal device 110 by using the communication signal. The radio resource is used for sensing and/or communication. In the bistatic system shown in FIG. 7, the terminal device 110 is used as an HCS node, further has a sensing capability, and may further send the sensing signal when performing communication, to sense a surrounding environment. For example, the terminal device 110 may send the sensing signal to the surrounding environment. After the sensing signal is reflected by the to-be-sensed target in the environment, a terminal device 130 receives the echo signal reflected by the to-be-sensed target, and then the terminal device 130 performs sensing measurement on the echo signal, to obtain a sensing result. For example, the terminal device 130 may determine information such as a location of the to-be-sensed target and a speed of the to-be-sensed target.

The term "to-be-sensed target" may be various tangible objects that can reflect an electromagnetic wave in the environment, for example, a ground object like a mountain, a forest, or a building, or may include a movable object like a vehicle, an uncrewed aerial vehicle, a pedestrian, or a terminal device. The to-be-sensed target may also be referred to as a target, a target to be sensed, a target to be detected, an object to be sensed, an object to be detected, a device to be sensed, or the like. This is not limited in embodiments of this application.

The sensing signal may be referred to as a detection signal, a linear frequency modulation signal, a radar signal, a radar sensing signal, a radar detection signal, an environment sensing signal, or the like. The sensing signal may be a pulse signal, or may be a signal in a wireless communication system. For example, the sensing signal may be an orthogonal frequency division multiplexing (orthogonal frequency division multiplexing, OFDM) signal obtained by modulating a specific sequence on a subcarrier. The specific sequence may be any one of the following sequences: a Zadoff-Chu sequence (ZC sequence for short), a pseudo-random sequence, a predefined sequence, and the like. The pseudo-random sequence includes any one of the following sequences: a maximal-length linear feedback shift register sequence (m sequence for short), a Gold sequence, and the like. The predefined sequence may be, for example, a random data symbol, for example, may be a random data symbol modulated in a manner like quadrature phase shift keying (quadrature phase shift keying, QPSK) or 16-quadrature amplitude modulation (quadrature amplitude modulation, QAM).

Optionally, when the sensing signal is used for communication, the sensing signal may also be referred to as an HCS signal. It may be understood that the HCS signal carries communication data or a communication reference signal sequence transmitted between communication apparatuses.

### (3) Factors affecting sensing

A transmit end of a sensing signal needs to determine a time domain resource of the sensing signal, and send the sensing signal on the time domain resource. An example of a time domain resource used to send the sensing signal is shown in FIG. 8.

A time period shown in FIG. 8 includes N+1 slots. A last symbol in each slot is used to send a sensing signal. A total of N+1 symbols in the N+1 slots are used to send the sensing signals. The N+1 symbols may be referred to as sensing resources. The transmit end may send the sensing signal on the last symbol in each slot. When the sensing signal is also used for communication, the sensing resource is also referred to as a harmonized communication and sensing resource. The sensing resource shown in FIG. 8 is an example rather than a limitation. The transmit end of the sensing signal may alternatively send the sensing signal on a plurality of symbols in one slot.

A sensing signal sent on a last symbol in an m^{th} slot in FIG. 8 may be denoted as *e^{jϕₘ}sₘ*(*t*), where j is an imaginary unit, *ϕₘ* is a phase value of the *m*^{th} slot, *sₘ*(*t*) is a baseband sensing signal of the *m*^{th} slot, *m* is an integer greater than or equal to 0, *m* is any value from 0 to N, and N is a positive integer. An echo signal (namely, the sensing signal reflected by a to-be-sensed target) received by a receive end is *Ae*^{*j(*2*πf_{d}mT+ϕₘ*)}*sₘ*(*t -* τ), where τ is a delay of the echo signal relative to the sensing signal, *T* is a sensing signal sending period, *f_{d}* is a Doppler frequency shift caused by movement of the to-be-sensed target, and *A* is an amplitude attenuation of the echo signal relative to the sensing signal. *A* is affected by a path loss and a reflection capability of the to-be-sensed target. When performing sensing measurement, the receive end may estimate a distance from the to-be-sensed target by measuring and estimating the delay of the echo signal relative to the sensing signal, to implement a ranging function. The receive end may estimate the Doppler frequency shift of the to-be-sensed target by measuring and estimating a phase relationship between a plurality of echo signals, to implement a speed measurement function.

For the speed measurement function, the receive end needs to measure the phase relationship between the plurality of echo signals. This requires that phase values of a plurality of sensing signals corresponding to the plurality of echo signals remain unchanged. In embodiments of this application, that an absolute value of a difference between phase values of any two sensing signals or the plurality of sensing signals is in an error range may be considered as "the phase values remain unchanged". For brevity, details are not described again. Still in FIG. 8, in a slot 0, a sensing signal sent by the transmit end is *e*^{*jϕ*₀}*s*₀(*t*), where a phase value is *ϕ*₀; and in a slot 1, a sensing signal sent by the transmit end is *e*^{*jϕ*₁}*s*₁(*t*), where a phase value is *ϕ*₁. The speed measurement function requires that the transmit end maintains phase continuity in a sensing time period, that is, phase values of different sensing signals in the sensing time period are the same or an absolute value of a difference between the phase values of the different sensing signals is less than a first value. However, the phase values are randomly generated by a radio frequency oscillator, and there is hardly a rule. Duration of a time period for sending a sensing signal, a change of transmit power or a transmit power level in the time period for sending the sensing signal, or receiving of another signal in a period of time (for example, between a last symbol in the slot 0 and a last symbol in the slot 1 in FIG. 8) may cause different phase values of different sensing signals (for example, the sensing signal sent in the slot 0 and the sensing signal sent in the slot 1 in FIG. 8). As a result, the speed measurement function cannot be implemented.

In embodiments of this application, the "phase value" may also be referred to as an "initial phase". For brevity, details are not described again.

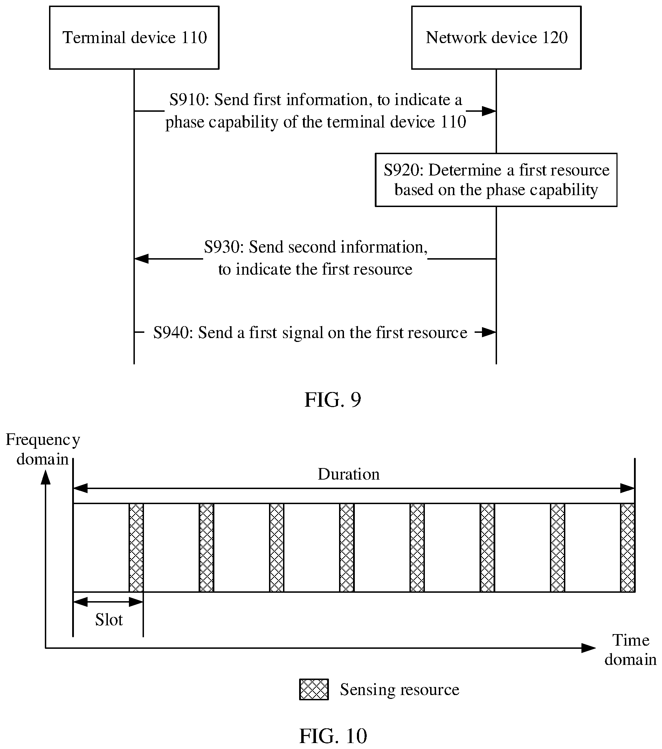

The following describes a communication method provided in embodiments of this application. The communication method can enable a signal sent by a terminal device to meet a requirement of a sensing function. As shown in FIG. 9, a method 900 includes the following content.

S910: A terminal device 110 sends first information, where the first information indicates a phase capability of the terminal device 110.

Correspondingly, a network device 120 receives the first information.

The first information may be physical layer information, for example, uplink control information (uplink control information, UCI), or may be MAC layer information or RRC layer information. A specific type of the first information is not limited in embodiments of this application.

The phase capability may be one of the following capabilities:
a capability of maintaining phase continuity (phase continuity);
a capability of maintaining a phase value of a radio frequency link unchanged; and
a capability that an absolute value of a difference between a phase value of a signal sent in a first time unit and a phase value of a signal sent in a second time unit is less than or equal to a first value, where the first time unit and the second time unit belong to a first time period.

Substantive content of the foregoing several descriptions is equivalent. For example, the terminal device 110 sends two sensing signals (the two sensing signals may be any two sensing signals in the first time period) in the first time period (a time period used to send a sensing signal, which may also be referred to as a "sensing time period"), where the terminal device 110 sends a sensing signal 1 in the first time unit, and sends a sensing signal 2 in the second time unit. If phase values of the two sensing signals are equal, or if an absolute value of a difference between the phase values of the two sensing signals is less than or equal to the first value, it may be considered that the terminal device 110 has the capability of maintaining phase continuity in the first time period, or the terminal device 110 has the capability of maintaining the phase value of the radio frequency link unchanged in the first time period, or the terminal device 110 has the "capability that the absolute value of the difference between the phase value of the signal sent in the first time unit and the phase value of the signal sent in the second time unit is less than the first value" in the first time period.

Optionally, the first time unit and the second time unit may be any two time units used to send a sensing signal in the first time period. For example, the first time unit and the second time unit may be two adjacent time units used to send a sensing signal in the first time period, where the first value is a first threshold; or the first time unit is a 1^{st} time unit used to send a sensing signal (or an earliest time unit used to send a sensing signal) in the first time period, and the second time unit is a time unit, other than the first time unit, that is used to send a sensing signal in the first time period, where the first value is a second threshold.

Optionally, the first time unit and the second time unit may be any two time units in the first time period. For example, the first time unit and the second time unit may be two adjacent time units in the first time period, where the first value is a first threshold; or the first time unit is a 1^{st} time unit (or an earliest time unit) in the first time period, and the second time unit is a time unit other than the first time unit in the first time period, where the first value is a second threshold.

The time unit may be a slot. A specific type of the time unit is not limited in embodiments of this application.

The first value may be a predefined value, for example, a value defined in a protocol; or the first value may be a value configured or indicated by the network device. A manner in which the terminal device 110 obtains the first value is not limited in embodiments of this application.

Based on the foregoing example, the terminal device 110 can indicate the phase capability of the terminal device in different manners, so that the network device 120 indicates a first resource based on the phase capability of the terminal device 110.

The phase capability may alternatively be described in another manner. This is not limited in embodiments of this application. The following uses "the first information indicates the capability that is of the terminal device 110 and that is of maintaining phase continuity" as an example for description.

S920: The network device 120 determines the first resource based on the phase capability.

The first resource is, for example, N+1 symbols in FIG. 8. A time period between a start moment and an end moment of the first resource may be referred to as the first time period, for example, a corresponding time period from a start location of a last symbol in a slot 0 to an end location of a last symbol in a slot N in FIG. 8. It can be learned from the foregoing descriptions that a time length of the first time period, a change of transmit power or a transmit power level in the first time period, or receiving of another signal in the first time period may cause different phase values of different sensing signals in the first time period. The network device 120 may determine the first resource based on a different phase capability.

The "time length of the first time period" may also be referred to as the "time period between the start moment and the end moment of the first resource" or a "time period occupied by the first resource", for example, the time period between the start location of the last symbol in the slot 0 and the end location of the last symbol in the slot N in FIG. 8.

The following separately describes, from the three aspects, a method for determining the first resource by the network device 120.
I. The capability of maintaining phase continuity includes duration of maintaining phase continuity.

Due to a cost constraint, an oscillator of the terminal device 110 has an oscillation jitter phenomenon. If oscillation jitter is severe, the phase value of the radio frequency link of the terminal device 110 changes in short time. If oscillation jitter is weak, after sufficiently long time, an accumulated value of oscillation jitter is large, and the phase value of the radio frequency link of the terminal device 110 also changes. The terminal device 110 reports the duration of maintaining phase continuity to the network device 120, and the network device 120 considers that a phase value of a sensing signal sent by the terminal device 110 within the duration remains unchanged. The network device 120 may schedule, for the terminal device 110, the first resource whose time length is less than or equal to that of the duration, to implement sensing functions such as speed measurement.

Optionally, the terminal device 110 may indicate a quantity of at least one time unit in the duration by using a first field in the first information.

The terminal device 110 may indicate the duration by using the first field shown in Table 3.

**Table 3**

| First field | Quantity of time units |
|---|---|
| 00 | 1 |
| 01 | 2 |
| 10 | 4 |
| 11 | 8 |

As shown in Table 3, if a value of the first field is 00, it indicates that the terminal device 110 can maintain phase continuity in one time unit; if the value of the first field is 01, it indicates that the terminal device 110 can maintain phase continuity in two time units; if the value of the first field is 10, it indicates that the terminal device 110 can maintain phase continuity in four time units; or if the value of the first field is 11, it indicates that the terminal device 110 can maintain phase continuity in eight time units.

If more time units need to be indicated by the first field, more bits may be set for the first field. The time unit may be a slot, a frame, or another type of time unit. The first field indicates the quantity of at least one time unit, so that the terminal device 110 can flexibly indicate the duration of maintaining phase continuity.

As shown in FIG. 10, the terminal device 110 sends a sensing signal on a last symbol in each slot, and may maintain phase values of sensing signals in eight consecutive slots unchanged. In this case, the duration is eight slots, and the terminal device 110 may set the first field to 11, to indicate that the terminal device 110 can maintain phase continuity in eight slots. After the network device 120 receives the first information, a time span of the first resource determined based on the value ("11") of the first field in the first information may be less than or equal to eight slots (an example of the duration), so that phase continuity can be maintained for a plurality of sensing signals sent by the terminal device 110 on the first resource. In addition, a sensing signal sent by the terminal device 110 in a time period other than the duration cannot meet a requirement of the sensing function. Therefore, the time span of the first resource is less than or equal to a time span of the duration, to avoid resource waste.

II. The capability of maintaining phase continuity includes a capability or an incapability of maintaining phase continuity after the transmit power changes or the transmit power level changes.

The capability of maintaining phase continuity may alternatively include one or more of the following several expressions:
the capability of maintaining phase continuity after the transmit power changes;
the incapability of maintaining phase continuity after the transmit power changes;
the capability of maintaining phase continuity after the transmit power level changes; and
the incapability of maintaining phase continuity after the transmit power level changes.

A radio frequency front-end of the terminal device 110 generally includes a plurality of power amplifiers (power amplifiers, PAs). When sending a signal, the terminal device 110 selects, based on a required transmit power requirement, different PAs or PA combinations to amplify power of the signal.

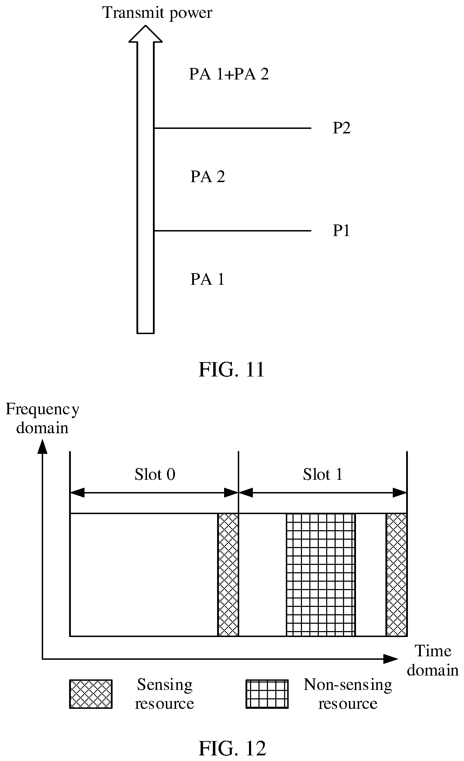

A possible correspondence between a transmit power requirement and a PA is shown in FIG. 11. The radio frequency front-end of the terminal device 110 includes two PAs, which are respectively denoted as a PA 1 and a PA 2. When the signal needs to be sent at power less than or equal to P1, the radio frequency front-end amplifies the signal by using the PA 1, and then sends the signal through an antenna. When the signal needs to be sent at power greater than P1 and less than or equal to P2, the radio frequency front-end amplifies the signal by using the PA 2, and then sends the signal through the antenna. When the signal needs to be sent at power greater than P2, the radio frequency front-end amplifies the signal by using the PA 1 and the PA 2 in a cascaded manner, and then sends the signal through the antenna. The terminal device 110 may be mobile, or there may be a plurality of signal sending requirements, and transmit power requirements of signals at different moments are different. Therefore, when the terminal device 110 sends the signal, PA cascading and switching may be required.

That the transmit power changes or the transmit power level changes may affect phase continuity. If the terminal device 110 can maintain phase continuity after the transmit power changes, the terminal device 110 may notify the network device 120 of this capability of the terminal device 110. The network device 120 may indicate the matched first resource to the terminal device 110 based on this capability of the terminal device 110. The terminal device 110 may adjust the transmit power in the time period between the start moment and the end moment of the first resource, where transmit power before and after adjustment is in a transmit power range for maintaining phase continuity. For example, the transmit power range is [A, B], and the transmit power in the first time period may be adjusted in the power range [A, B].

If the terminal device 110 can maintain phase continuity after the transmit power level changes, the terminal device 110 may notify the network device 120 of this capability of the terminal device 110. The network device 120 may indicate the matched first resource to the terminal device 110 based on this capability of the terminal device 110. The terminal device 110 may adjust the transmit power level in the time period between the start moment and the end moment of the first resource, where transmit power levels before and after adjustment are in a transmit power range for maintaining phase continuity. For example, the transmit power range is [A, C], and the transmit power level in the first time period may be adjusted from a power level [A, B] to a power level [B, C], where A is less than or equal to B, and B is less than or equal to C.

If the terminal device 110 can maintain phase continuity in some transmit power ranges, the terminal device 110 may notify the network device 120 of this capability of the terminal device 110. The network device 120 may indicate the matched first resource to the terminal device 110 based on this capability of the terminal device 110. Transmit power before and after adjustment is in a transmit power range for maintaining phase continuity. For example, the transmit power range is [A, B], and the transmit power in the first time period may be adjusted in the power range [A, B].

In this way, the terminal device 110 can further flexibly adapt to different communication scenarios when ensuring that phase continuity is maintained for a plurality of signals sent on the first resource.

If the terminal device 110 cannot maintain phase continuity after the transmit power changes or the transmit power level changes, the terminal device 110 may also notify the network device 120 of this capability of the terminal device 110. The network device 120 may indicate the matched first resource to the terminal device 110 based on this capability of the terminal device 110. The terminal device 110 may maintain the transmit power or the transmit power level unchanged in the time period between the start moment and the end moment of the first resource. In this way, the terminal device 110 can ensure that phase continuity is maintained for the plurality of signals sent on the first resource.

Optionally, the terminal device 110 may indicate, by using a second field, the capability or the incapability of maintaining phase continuity after the transmit power changes or the transmit power level changes.

The second field and the first field may belong to same information (for example, both belong to the first information), or may belong to different information. This is not limited in embodiments of this application.

For example, the second field includes 1 bit. The second field being 0 indicates the incapability of maintaining phase continuity after the transmit power changes or the transmit power level changes in the first time period. The second field being 1 indicates the capability of maintaining phase continuity after the transmit power changes or the transmit power level changes in the first time period.

If the second field is 1, the network device 120 may schedule the first resource based on FIG. 12. As shown in FIG. 12, a sensing resource (namely, the first resource) includes a last symbol in a slot 0 and a last symbol in a slot 1, and the slot 1 further includes a non-sensing resource. The non-sensing resource is used to send a non-sensing signal. For example, when the terminal device 110 sends an uplink signal on the non-sensing resource, the non-sensing resource may be used to carry a physical uplink shared channel (physical uplink shared channel, PUSCH). When the terminal device 110 sends a sidelink signal on the non-sensing resource, the non-sensing resource may be used to carry a physical sidelink shared channel (physical sidelink shared channel, PSSCH). A specific form of the non-sensing resource is not limited in embodiments of this application. Transmit power of the terminal device 110 on the non-sensing resource may be the same as or different from transmit power of the terminal device 110 on the sensing resource. The terminal device 110 may send, on the sensing resource shown in FIG. 12, a sensing signal whose phase value remains unchanged.

For example, power at which the terminal device 110 sends the sensing signal in the first time period is power 1, power at which the terminal device 110 sends data on the PUSCH in the first time period is power 2, and a transmit power level for maintaining phase continuity includes [P1, P2] and [P2, P3]. The power 1 is in [P1, P2], and the power 2 is in [P2, P3]. Therefore, phase continuity can be maintained for the sensing signal sent by the terminal device 110 in the first time period.

For another example, a power level at which the terminal device 110 sends the sensing signal in the first time period is [P1, P2], a power level at which the terminal device 110 sends data on the PUSCH in the first time period is [P2, P3], and a transmit power level for maintaining phase continuity includes [P1, P2] and [P2, P3]. [P1, P2] and [P2, P3] are transmit power levels for maintaining phase continuity. Therefore, phase continuity can be maintained for the sensing signal sent by the terminal device 110 in the first time period.

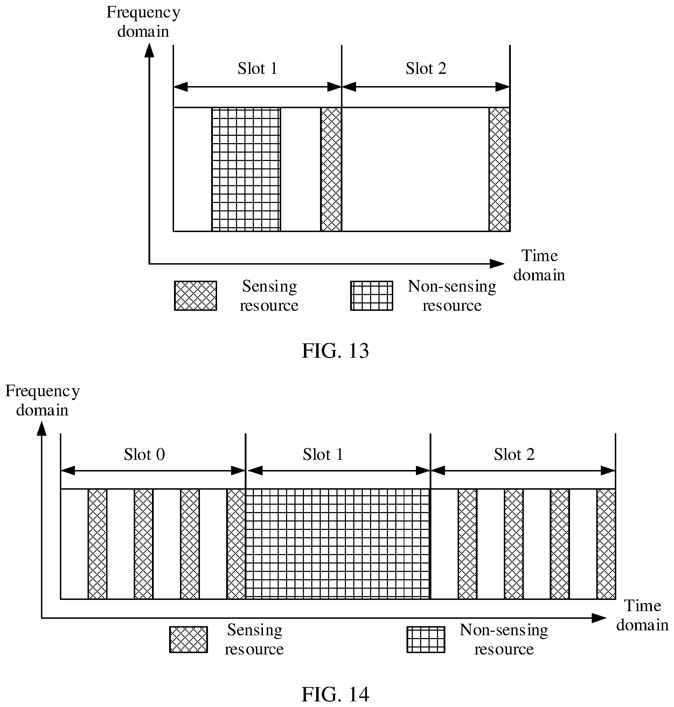

If the second field is 0, the network device 120 may schedule the first resource based on FIG. 12. The network device 120 configures transmit power of the non-sensing resource, so that the transmit power of the terminal device 110 on the non-sensing resource is the same as the transmit power of the terminal device 110 on the sensing resource. Alternatively, the network device 120 may schedule the first resource based on FIG. 13.

For example, power at which the terminal device 110 sends the sensing signal in the first time period is power 1, power at which the terminal device 110 sends data on the PUSCH in the first time period is power 1, and the transmit power of the terminal device 110 in the first time period remains unchanged. Therefore, phase continuity can be maintained for the sensing signal sent by the terminal device 110 in the first time period.

For another example, a power level at which the terminal device 110 sends the sensing signal in the first time period is [P1, P2], a power level at which the terminal device 110 sends data on the PUSCH in the first time period is [P1, P2], and the transmit power level of the terminal device 110 in the first time period remains unchanged. Therefore, phase continuity can be maintained for the sensing signal sent by the terminal device 110 in the first time period.

As shown in FIG. 13, a sensing resource (namely, the first resource) includes a last symbol in a slot 1 and a last symbol in a slot 2, and the slot 1 further includes a non-sensing resource. The non-sensing resource may be used to carry a PUSCH or a PSSCH. There is no non-sensing resource in a time period between any two sensing resources. In this way, transmit power or a transmit power level at which the terminal device 110 sends sensing signals in the slot 1 and the slot 2 remains unchanged, and matches the phase capability of the terminal device 110, and the terminal device 110 may send, on the sensing resource shown in FIG. 13, a sensing signal whose phase value remains unchanged.

Optionally, the terminal device 110 can maintain phase continuity in a first transmit power range, and the terminal device 110 may notify the network device 120 of the first power range by using a third field.

The third field, the second field, and the first field may belong to same information (for example, all belong to the first information), or may belong to different information. This is not limited in embodiments of this application.

Optionally, the third field may include a plurality of bits, and the plurality of bits indicate the first transmit power range. In embodiments of this application, the transmit power range may also be referred to as a transmit power level.

In an implementation, the first transmit power range is described with reference to Table 4.

**Table 4**

| Third field | Power value |
|---|---|
| 00 | A |
| 01 | B |
| 10 | C |
| 11 | D |

In Table 4, different values of the bits in the third field may indicate different power values, where "00" indicates a power value A, "01" indicates a power value B, "10" indicates a power value C, and "11" indicates a power value D. The terminal device 110 may indicate a plurality of power values by using a plurality of third fields. For example, the third field is set to 0010, and may indicate the power value A and the power value C, and the two power values may represent two endpoints of a transmit power range, namely, the power range [A, C].

For example, the terminal device 110 can maintain phase continuity in a first transmit power range [A, B], and the terminal device 110 may send the power value A and the power value B to the network device 120 by using the third field. Based on Table 4, the third field may be set to 0001. After receiving the third field, the network device 120 determines that the terminal device 110 can maintain phase continuity in the first transmit power range. The network device 120 may determine, based on first two bits 00 in the third field, that a left endpoint of the first transmit power range is A, and determine, based on last two bits 01, that a right endpoint of the first transmit power range is B. The network device 120 may schedule the first resource based on FIG. 12, and limit transmit power of the sensing resource and the non-sensing resource to the power range [A, B].

For another example, the terminal device 110 can maintain phase continuity in a first transmit power range [B, D], and the terminal device 110 may send the power value B and the power value D to the network device 120 by using the third field. Based on Table 4, the third field may be set to 0111. After receiving the third field, the network device 120 determines that the terminal device 110 can maintain phase continuity in the first transmit power range. The network device 120 may determine, based on first two bits 01 in the third field, that a left endpoint of the first transmit power range is B, and determine, based on last two bits 11, that a right endpoint of the first transmit power range is D. The network device 120 may schedule the first resource based on FIG. 12, and limit transmit power of the sensing resource and the non-sensing resource to the power range [B, D].

In another implementation, the first transmit power range is described with reference to Table 5.

**Table 5**

| Third field | Power range |
|---|---|
| 00 | Null (incapability of maintaining phase continuity after the transmit power changes) |
| 01 | [A, B] |
| 10 | [B, C] |
| 11 | [C, D] |

In Table 4, different values of the bits in the third field may indicate different power values, where "00" indicates the incapability of maintaining phase continuity after the transmit power changes, "01" indicates the power range [A, B], "10" indicates the power range [B, C], and "11" indicates the power range [C, D]. The terminal device 110 may indicate a plurality of power ranges by using a plurality of third fields. For example, the third field is set to 0110, and may indicate the power range [A, B] and the power range [B, C], and the two power ranges may represent a transmit power range for maintaining phase continuity, namely, the power range [A, C].

For example, the terminal device 110 can maintain phase continuity in a first transmit power range [C, D], and the terminal device 110 may send the power range [C, D] to the network device 120 by using the third field. Based on Table 5, the third field may be set to 11. After receiving the third field, the network device 120 determines that the terminal device 110 can maintain phase continuity in the first transmit power range. The network device 120 may determine, based on bits 11 in the third field, that the first transmit power range is [C, D]. The network device 120 may schedule the first resource based on FIG. 12, and limit transmit power levels of the sensing resource and the non-sensing resource to the power range [C, D].

For another example, the terminal device 110 cannot maintain phase continuity after the transmit power changes. Based on Table 5, the terminal device 110 may set the third field to 00. After the network device 120 receives the third field, the network device 120 may determine, based on bits 00 in the third field, that the terminal device 110 cannot maintain phase continuity after the transmit power changes. The network device 120 may schedule the first resource based on FIG. 12, and set the transmit power of the non-sensing resource and transmit power of the sensing resource to a same power.

The third field may alternatively include more or fewer bits. A specific type of the third field is not limited in embodiments of this application.

The terminal device 110 may send the third field and the second field, or may send only the third field without sending the second field.

Optionally, the terminal device 110 may send the second field only when phase continuity can be maintained after the transmit power changes or the transmit power level changes, where the second field indicates the capability of maintaining phase continuity after the transmit power changes or the transmit power level changes; or the terminal device 110 may send the second field only when phase continuity cannot be maintained after the transmit power changes or the transmit power level changes, where the second field indicates the incapability of maintaining phase continuity after the transmit power changes or the transmit power level changes; or the terminal device 110 sends the second field regardless of whether phase continuity can be maintained after the transmit power changes or the transmit power level changes, where the second field indicates the capability or the incapability of maintaining phase continuity after the transmit power changes or the transmit power level changes.

III. The capability of maintaining phase continuity includes a capability or an incapability of maintaining phase continuity after a signal is received.

The capability of maintaining phase continuity may alternatively include one or more of the following several expressions:
the capability of maintaining phase continuity after the signal is received; and
the incapability of maintaining phase continuity after the signal is received.

A time division duplex mode is a typical duplex mode, and in this mode, data is sent and received in a time division manner. Receiving of the signal may affect phase continuity of a sent signal. If the terminal device 110 can maintain phase continuity after receiving the signal, the terminal device 110 may notify the network device 120 of this capability of the terminal device 110. The network device 120 may indicate the matched first resource to the terminal device 110 based on this capability of the terminal device 110. The terminal device 110 may receive the signal in the time period between the start moment and the end moment of the first resource. In this way, the terminal device 110 can further flexibly adapt to different communication scenarios when ensuring that phase continuity is maintained for a plurality of signals sent on the first resource.

If the terminal device 110 cannot maintain phase continuity after receiving the signal, the terminal device 110 may notify the network device 120 of this capability of the terminal device 110. The network device 120 may indicate the matched first resource to the terminal device 110 based on this capability of the terminal device 110. The terminal device 110 may send only the signal in the time period between the start moment and the end moment of the first resource. In this way, the terminal device 110 can also ensure that phase continuity is maintained for a plurality of signals sent on the first resource.

Optionally, the terminal device 110 may indicate, by using a fourth field, the capability or the incapability of maintaining phase continuity after the signal is received.

The fourth field, the third field, the second field, and the first field may belong to same information (for example, all belong to the first information), or may belong to different information. This is not limited in embodiments of this application.

For example, the fourth field includes 1 bit. The fourth field being 0 indicates the incapability of maintaining phase continuity after the signal is received. The fourth field being 1 indicates the capability of maintaining phase continuity after the signal is received.

If the fourth field is 1, the network device 120 may schedule the first resource based on FIG. 14. As shown in FIG. 14, a sensing resource (namely, the first resource) includes four symbols in a slot 0 and four symbols in a slot 2, and the slot 1 includes a non-sensing resource. The non-sensing resource is used to receive the signal. For example, when the terminal device 110 receives a downlink signal on the non-sensing resource, the non-sensing resource may be used to carry a physical downlink shared channel (physical downlink shared channel, PDSCH) of the terminal device 110. When the terminal device 110 receives a sidelink signal on the non-sensing resource, the non-sensing resource may be used to carry a PSSCH. A specific form of the non-sensing resource is not limited in embodiments of this application. The terminal device 110 may send, on the sensing resource shown in FIG. 14, a sensing signal whose phase value remains unchanged.

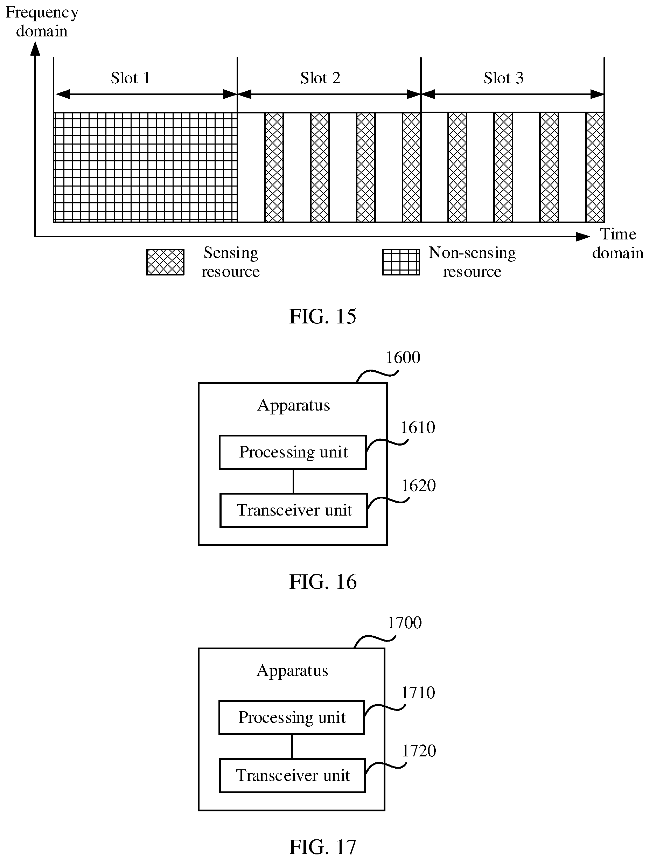

If the fourth field is 0, the network device 120 may schedule the first resource based on FIG. 15. As shown in FIG. 15, a sensing resource (namely, the first resource) includes four symbols in a slot 2 and four symbols in a slot 3, and a slot 1 includes a non-sensing resource. The non-sensing resource may be used to carry a PDSCH or a PSSCH. There is no non-sensing resource used to receive the signal in a time period in which the sensing resource is. In this way, the terminal device 110 does not receive the signal in a time period in which the sensing signals are sent in the slot 2 and the slot 3, the sensing resource matches the phase capability of the terminal device 110, and the terminal device 110 may send, on the sensing resource shown in FIG. 15, a sensing signal whose phase value remains unchanged.

Optionally, the terminal device 110 may send the fourth field only when phase continuity can be maintained after the signal is received, where the fourth field indicates the capability of maintaining phase continuity after the signal is received; or the terminal device 110 may send the fourth field only when phase continuity cannot be maintained after the signal is received, where the fourth field indicates the incapability of maintaining phase continuity after the signal is received; or the terminal device 110 sends the fourth field regardless of whether phase continuity can be maintained after the signal is received, where the fourth field indicates the capability or the incapability of maintaining phase continuity after the signal is received.

The foregoing describes in detail different types of phase capabilities and examples in which the network device 120 schedules the first resource based on the different types of phase capabilities. Optionally, the terminal device 110 may report one phase capability, or may report a plurality of phase capabilities. When the terminal device 110 reports the plurality of phase capabilities, the network device 120 needs to schedule the first resource that meets the plurality of phase capabilities.

For example, the terminal device 110 reports, by using the first field, that the duration of maintaining phase continuity is eight consecutive slots, and reports, by using the second field, the incapability of maintaining phase continuity after the transmit power changes. In this case, the first resource scheduled by the network device 120 needs to meet the following: The time span is less than or equal to eight slots, and there is no resource used to send a signal between the start moment and the end moment of the first resource (or there is a resource used to send the signal between the start moment and the end moment of the first resource, but transmit power corresponding to the resource is the same as transmit power of the first resource).

For another example, the terminal device 110 reports, by using the first field, that the duration of maintaining phase continuity is eight consecutive slots, reports the transmit power range [C, D] by using the third field, and reports, by using the fourth field, the capability of maintaining phase continuity after the signal is received. In this case, the first resource scheduled by the network device 120 needs to meet the following: The time span is less than or equal to eight slots; there may be a resource used to send the non-sensing signal between the start moment and the end moment of the first resource, and the resource used to send the non-sensing signal is, for example, the PUSCH or the PSSCH, a transmit power level corresponding to the resource needs to be limited to the transmit power range [C, D] (or there is no resource used to send the non-sensing signal between the start moment and the end moment of the first resource), and transmit power corresponding to the first resource is in the power range [C, D]; and there may be a resource used to receive the signal between the start moment and the end moment of the first resource (or there is no resource used to receive the signal between the start moment and the end moment of the first resource), and the resource used to receive the signal is, for example, the PDSCH or the PSSCH.

It should be noted that, if the terminal device 110 reports the phase capabilities by using a plurality of fields (for example, the first field, the second field, the third field, and the fourth field), the plurality of fields may be in same information (for example, the first information), or may be in different information. This is not limited in embodiments of this application.

Optionally, the plurality of fields may be fields in an RRC layer message, or may be fields in a MAC layer message, for example, fields in a MAC control element (control element, CE), or may be fields in a physical layer message, for example, fields in UCI.

After determining the first resource, the network device 120 performs the following steps.

S930: The network device 120 sends second information, where the second information indicates the first resource.

Correspondingly, the terminal device 110 receives the second information.

That the second information indicates the first resource may also be expressed as follows:
the second information is used to configure the first resource; or
the second information is used to reconfigure the first resource; or
the second information is used to schedule the first resource.

The second information may be a field in an RRC layer message, or may be a field in a MAC layer message, for example, a MAC CE, or may be a field in a physical layer message, for example, a field in downlink control information (downlink control information, DCI).

A message that carries the second information is not limited in embodiments of this application.

S940: The terminal device 110 sends a first signal on the first resource.

Correspondingly, the network device 120 receives the first signal, where the first signal received by the network device 120 may be a signal reflected by a to-be-sensed target in an environment, namely, an echo signal.

The first signal may be a reference signal. In this case, the first signal may be used for channel estimation and/or channel measurement. A function of the first signal includes sensing. In addition to being used for sensing, the first signal may be further used for communication. The function of the first signal other than sensing is not limited in embodiments of this application.

In addition, the first signal may also be referred to as a first channel, first data, sensing information, a sensing signal, a communication and sensing signal, a harmonized communication and sensing signal, or the like. A specific form of the first signal is not limited in embodiments of this application.

The sensing function requires that a sent signal has a stable phase value in a period of time. Different terminal devices have different phase capabilities. If the phase capability of the terminal device is not considered for a resource for sending the signal, the signal sent by the terminal device may not be able to maintain the stable phase value. In the method 900, the terminal device 110 notifies the network device 120 of the phase capability of the terminal device 110, and the network device 120 can indicate the first resource based on the phase capability of the terminal device 110. In this way, the first resource matches the phase capability of the terminal device 110, and the first signal sent by the terminal device 110 on the first resource can meet the requirement of the sensing function.

The foregoing describes in detail the method examples provided in embodiments of this application. It may be understood that, to implement the foregoing functions, a corresponding apparatus includes a corresponding hardware structure and/or software module for performing the functions. A person skilled in the art should be easily aware that, in combination with units and algorithm steps of the examples described in embodiments disclosed in this specification, this application can be implemented by hardware or a combination of the hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

FIG. 16 is a diagram of a structure of a communication apparatus according to an embodiment of this application. The apparatus 1600 includes a processing unit 1610 and a transceiver unit 1620. The transceiver unit 1620 performs a receiving step and/or a sending step under control of the processing unit 1610. The transceiver unit 1620 is a sending unit when performing the sending step, and the transceiver unit 1620 is a receiving unit when performing the receiving step.

The transceiver unit 1620 is configured to: send first information, where the first information indicates a phase capability of a terminal device; and send a first signal on a first resource, where the first resource is determined based on the phase capability.

Optionally, the phase capability includes: a capability of maintaining phase continuity; or a capability of maintaining a phase value of a radio frequency link unchanged; or a capability that an absolute value of a difference between a phase value of a signal sent in a first time unit and a phase value of a signal sent in a second time unit is less than or equal to a first value, where the first time unit and the second time unit belong to a first time period.

Optionally, the phase capability includes duration of maintaining phase continuity.

Optionally, a time span of the first resource is less than or equal to a time span of the duration.

Optionally, the first information includes a first field, and the first field indicates a quantity of at least one time unit included in the duration.

Optionally, the phase capability includes a capability of maintaining phase continuity after transmit power changes or a transmit power level changes, and/or a transmit power range for maintaining phase continuity.

Optionally, the phase capability includes an incapability of maintaining phase continuity after transmit power changes or a transmit power level changes; and the transmit power or the transmit power level of the terminal device remains unchanged in a time period between a start moment and an end moment of the first resource.

Optionally, the phase capability includes a capability of maintaining phase continuity after a signal is received.

Optionally, the phase capability includes an incapability of maintaining phase continuity after a signal is received; and the terminal device is capable of sending only a signal in the time period between the start moment and the end moment of the first resource.

Optionally, before sending the first signal on the first resource, the transceiver unit 1620 is further configured to receive second information, where the second information indicates the first resource.

Optionally, the first signal is used for sensing.

It may be clearly understood by a person skilled in the art that, for a detailed working process of the apparatus 1600 and technical effect generated by execution steps, refer to the descriptions in the foregoing corresponding method embodiments. For brevity, details are not described herein again.

The apparatus 1600 may be a terminal device or a chip. The processing unit 1610 may be implemented by hardware or software. When being implemented by hardware, the processing unit 1610 may be a logic circuit, an integrated circuit, or the like. When the processing unit 1610 is implemented by software, the processing unit 1610 may be a general-purpose processor, and is implemented by reading software code stored in a storage unit. The storage unit may be integrated into the processing unit 1610, or located outside the processing unit 1610 and exist independently.

FIG. 17 is a diagram of a structure of another communication apparatus according to an embodiment of this application. The apparatus 1700 includes a processing unit 1710 and a transceiver unit 1720. The transceiver unit 1720 performs a receiving step and/or a sending step under control of the processing unit 1710. The transceiver unit 1720 is a sending unit when performing the sending step, and the transceiver unit 1720 is a receiving unit when performing the receiving step.

The transceiver unit 1720 is configured to receive first information, where the first information indicates a phase capability of a terminal device.

The processing unit 1710 is configured to determine a first resource based on the phase capability.

The transceiver unit 1720 is further configured to receive a first signal on the first resource.

Optionally, the phase capability includes: a capability of maintaining phase continuity; or a capability of maintaining a phase value of a radio frequency link unchanged; or a capability that an absolute value of a difference between a phase value of a signal sent in a first time unit and a phase value of a signal sent in a second time unit is less than or equal to a first value, where the first time unit and the second time unit belong to a first time period.

Optionally, the phase capability includes duration of maintaining phase continuity.

Optionally, a time span of the first resource is less than or equal to a time span of the duration.

Optionally, the first information includes a first field, and the first field indicates a quantity of at least one time unit included in the duration.

Optionally, the phase capability includes a capability of maintaining phase continuity after transmit power changes or a transmit power level changes, and/or a transmit power range for maintaining phase continuity.

Optionally, the phase capability includes an incapability of maintaining phase continuity after transmit power changes or a transmit power level changes; and the transmit power or the transmit power level of the terminal device remains unchanged in a time period between a start moment and an end moment of the first resource.

Optionally, the phase capability includes a capability of maintaining phase continuity after a signal is received.

Optionally, the phase capability includes an incapability of maintaining phase continuity after a signal is received; and the terminal device is capable of sending only a signal in the time period between the start moment and the end moment of the first resource.

Optionally, before receiving the first signal on the first resource, the method further includes: sending second information, where the second information indicates the first resource.

Optionally, the first signal is used for sensing.

It may be clearly understood by a person skilled in the art that, for a detailed working process of the apparatus 1700 and technical effect generated by execution steps, refer to the descriptions in the foregoing corresponding method embodiments. For brevity, details are not described herein again.

The apparatus 1700 may be a network device or a chip. The processing unit 1710 may be implemented by hardware or software. When being implemented by hardware, the processing unit 1710 may be a logic circuit, an integrated circuit, or the like. When the processing unit 1710 is implemented by software, the processing unit 1710 may be a general-purpose processor, and is implemented by reading software code stored in a storage unit. The storage unit may be integrated into the processing unit 1710, or located outside the processing unit 1710 and exist independently.

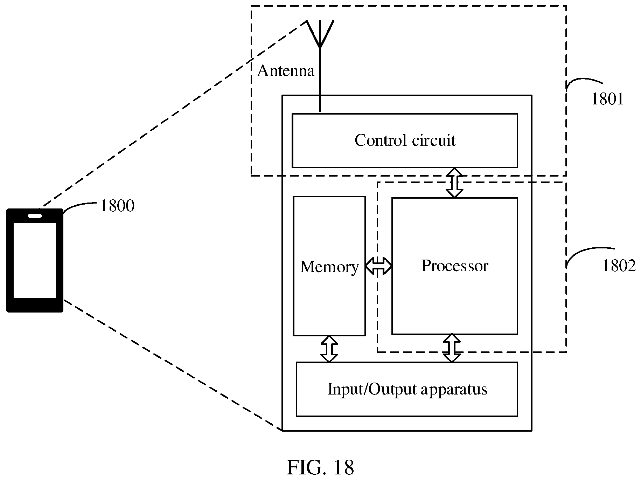

FIG. 18 is a diagram of a structure of a terminal device according to an embodiment of this application. For ease of description, FIG. 18 shows only main components of the terminal device 1800. The terminal device 1800 may be used in the system shown in FIG. 1, to implement functions of the terminal device in the foregoing method embodiments. As shown in the figure, the terminal device 1800 includes a processor, a memory, a control circuit, an antenna, and an input/output apparatus. The processor is mainly configured to: process a communication protocol and communication data, control the entire terminal device, execute a software program, and process data of the software program, for example, configured to support the terminal device in performing actions described in the foregoing method embodiments. The memory is mainly configured to store the software program and data. The control circuit is mainly configured to: perform conversion between a digital signal and a radio frequency signal, and process the radio frequency signal. The control circuit and the antenna together may also be referred to as a transceiver, and are mainly configured to: receive and send radio frequency signals in a form of an electromagnetic wave. The input/output apparatus is, for example, a touchscreen, a display, or a keyboard, and is mainly configured to: receive data input by a user and output data to the user.

After the terminal device is powered on, the processor may read the software program in the memory, interpret and execute instructions of the software program, and process the data of the software program. When the data needs to be sent wirelessly, the processor processes the to-be-sent data, and then outputs a digital signal to a radio frequency circuit. The radio frequency circuit performs radio frequency processing on the digital signal, and then sends a radio frequency signal in a form of an electromagnetic wave through the antenna. When data is sent to the terminal device, the radio frequency circuit receives a radio frequency signal through the antenna, converts the radio frequency signal into a digital signal, and outputs the digital signal to the processor. The processor converts the digital signal into the data, and processes the data.

A person skilled in the art may understand that, for ease of description, FIG. 18 shows only one memory and one processor. In an actual terminal device, there may be a plurality of processors and a plurality of memories. The memory may also be referred to as a storage medium, a storage device, or the like. This is not limited in this application.

In an optional implementation, the processor may include a baseband processor and/or a central processing unit. The baseband processor is mainly configured to process the communication protocol and the communication data. The central processing unit is mainly configured to: control the entire terminal device, execute the software program, and process the data of the software program. Functions of the baseband processor and the central processing unit may be integrated into the processor in FIG. 18. A person skilled in the art may understand that the baseband processor and the central processing unit may alternatively be independent processors, and are interconnected by using a technology like a bus. A person skilled in the art may understand that the terminal device may include a plurality of baseband processors to adapt to different network standards, and the terminal device may include a plurality of central processing units to enhance processing capabilities of the terminal device, and components of the terminal device may be connected to each other through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program, and the processor executes the software program to implement a baseband processing function.

In this embodiment of this application, the antenna and the control circuit that have receiving and sending functions may be considered as a transceiver unit 1801 of the terminal device 1800, for example, configured to support the terminal device in implementing the receiving function and the sending function in the method embodiments. The processor having a processing function is considered as a processor 1802 of the terminal device 1800. The terminal device 1800 includes the transceiver unit 1801 and the processor 1802. The transceiver unit 1801 may also be referred to as a transceiver, a transceiver machine, a transceiver apparatus, or the like. For example, a device configured to implement the receiving function in the transceiver unit 1801 may be considered as a receiving unit, and a device configured to implement the sending function in the transceiver unit 1801 may be considered as a sending unit. In other words, the transceiver unit 1801 includes the receiving unit and the sending unit. The receiving unit may also be referred to as a receiving machine, an input port, a receiving circuit, or the like. The sending unit may be referred to as a transmitting machine, a transmitter, a transmitting circuit, or the like. For example, the transceiver unit 1801 may not include an antenna, but includes only a circuit part, and the antenna is disposed outside the transceiver unit.

The processor 1802 may be configured to execute instructions stored in the memory to control the transceiver unit 1801 to receive a signal and/or send a signal, to complete functions of the terminal device in the foregoing method embodiments. In an implementation, a function of the transceiver unit 1801 may be implemented by using a transceiver circuit or a transceiver-dedicated chip. When receiving and sending various types of signals, the processor 1802 controls the transceiver unit 1801 to implement the receiving. Therefore, the processor 1802 is a decider of the signal sending and receiving, and initiates data sending and receiving operations. The transceiver unit 1801 is a performer of the signal sending and receiving.

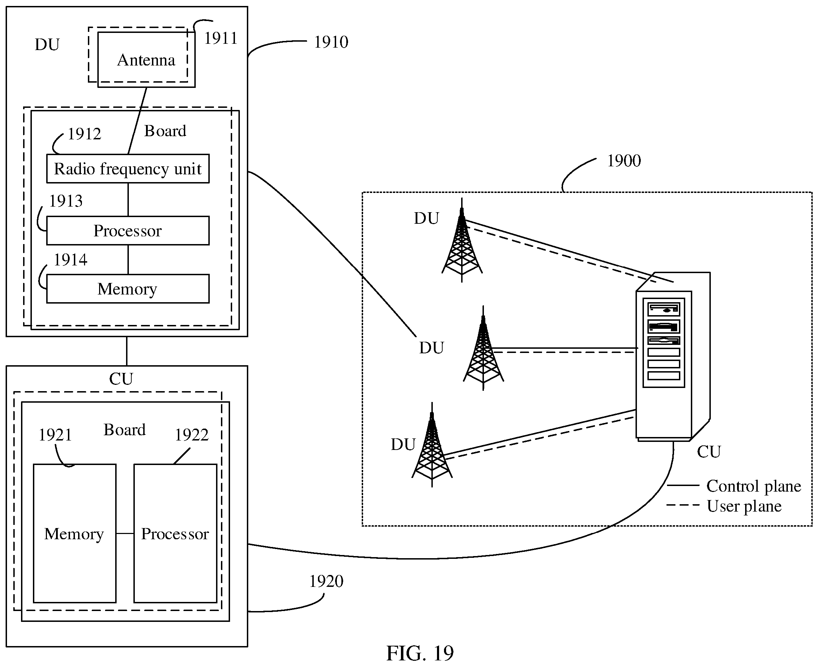

FIG. 19 is a diagram of a structure of a network device according to an embodiment of this application. For ease of description, FIG. 19 shows only main components of the network device 1900. The network device 1900 may be used in the system shown in FIG. 1, to implement functions of the network device in the foregoing method embodiments. As shown in FIG. 19, the network device 1900 may include one or more DUs 1910 and one or more CUs 1920. The DU 1910 may include at least one antenna 1911, at least one radio frequency unit 1912, at least one processor 1913, and at least one memory 1914. The CU 1920 may communicate with a core network, and the CU 1920 may include at least one processor 1922 and at least one memory 1921.

The DU 1910 is mainly configured to: receive and send radio frequency signals, and perform conversion between the radio frequency signal and a baseband signal, to complete a part of baseband processing functions. The CU 1920 may include the at least one processor 1922 and the at least one memory 1921. The CU 1920 and the DU 1910 may communicate with each other through an interface. A control plane (control plane, CP) interface may be Fs-C, for example, F1-C, and a user plane (user plane, UP) interface may be Fs-U, for example, F1-U.

The CU 1920 is a control center of the network device 1900, may also be referred to as a processing unit, and is mainly configured to complete a baseband processing function, for example, channel coding, multiplexing, modulation, or spectrum spreading. For example, the CU 1920 may be configured to control the network device 1900 to perform an operation procedure related to the network device in the foregoing method embodiments. The DU 1910 and the CU 1920 may be physically disposed together, or may be physically separate, namely, a distributed base station.

Baseband processing functions of the DU 1910 and the CU 1920 may be divided based on protocol layers of a wireless network. For example, functions of a PDCP layer and a protocol layer above the PDCP layer are set on the CU 1920, and a function of a protocol layer below the PDCP layer is set on the DU 1910.

In an optional embodiment, the DU 1910 may include one or more boards. A plurality of boards may jointly support a radio access network (for example, an NR network) of a single access standard, or may respectively support radio access networks (for example, an LTE network and an NR network) of different access standards. The memory 1914 is configured to store necessary instructions and data. The processor 1913 is configured to control the network device 1900 to perform a necessary action. The memory 1914 and the processor 1913 may serve the one or more boards. In other words, a memory and a processor may be independently disposed on each board. Alternatively, a shared memory and processor may be disposed for the plurality of boards. In addition, a necessary circuit may be further disposed on each board.

In an optional embodiment, the CU 1920 may include one or more boards. A plurality of boards may jointly support a radio access network (for example, an NR network) of a single access standard, or may respectively support radio access networks (for example, an LTE network and an NR network) of different access standards. The memory 1921 is configured to store necessary instructions and data. The processor 1922 is configured to control the network device 1900 to perform a necessary action, for example, configured to control the network device 1900 to perform an operation procedure related to the network device in the foregoing method embodiments. The memory 1921 and the processor 1922 may serve the one or more boards. In other words, a memory and a processor may be independently disposed on each board. Alternatively, a shared memory and processor may be disposed for the plurality of boards. In addition, a necessary circuit may be further disposed on each board.

It should be understood that the network device 1900 shown in FIG. 19 can implement processes related to the network device in the method embodiments. Operations and/or functions of the modules in the network device 1900 are intended to implement corresponding procedures in the foregoing method embodiments. For details, refer to the descriptions in the foregoing method embodiments. Details are not described herein again.

It should be understood that the network device 1900 shown in FIG. 19 is merely a possible architecture of a network device, and does not constitute any limitation on this application. The method provided in this application is applicable to a network device having another architecture, for example, a network device including a CU, a DU, and an AAU, or a network device including a BBU and an RRU. A specific architecture of the network device is not limited in this application.

It may be understood that the processor in embodiments of this application may be an integrated circuit chip, and has a signal processing capability. In an implementation process, steps in the foregoing method embodiments may be completed through a hardware integrated logic circuit in the processor or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component, and may implement or perform the methods, the steps, and logic block diagrams that are disclosed in embodiments of this application. The general-purpose processor may be a microprocessor, and the processor may alternatively be any conventional processor or the like. Steps of the methods disclosed with reference to embodiments of this application may be directly performed and completed by a hardware decoding processor, or may be performed and completed by a combination of hardware in the decoding processor and a software module. The software module may be located in a mature storage medium in the art, for example, a random access memory, a flash memory, a read-only memory, a programmable read-only memory or an electrically erasable programmable memory, or a register. The storage medium is located in the memory, and the processor reads information in the memory and completes the steps of the foregoing methods in combination with hardware of the processor.

It may be understood that the memory in embodiments of this application may be a volatile memory or a non-volatile memory, or may include the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and the methods described in this specification includes but is not limited to these and any memory of another appropriate type.

It may be understood that the chip in embodiments of this application may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

In an implementation process, the steps of the foregoing method may be completed through a hardware integrated logic circuit in the processor or by using instructions in a form of software. The steps of the methods disclosed with reference to embodiments of this application may be directly performed by a hardware processor, or may be performed by a combination of hardware in the processor and a software module. The software module may be located in a mature storage medium in the art, for example, a random access register, a flash memory, a read-only memory, a programmable read-only memory, an electrically erasable programmable memory, or a register. The storage medium is located in the memory, and the processor reads information in the memory and completes the steps of the foregoing methods in combination with hardware of the processor. To avoid repetition, details are not described herein again.

This application further provides a computer-readable medium. The computer-readable medium stores a computer program. When the computer program is executed by a computer, functions in any one of the foregoing method embodiments are implemented.

This application further provides a computer program product. When the computer program product is executed by a computer, functions in any one of the foregoing method embodiments are implemented.

The foregoing embodiments may be all or partially implemented using software, hardware, firmware, or any combination thereof. When being implemented using the software, the foregoing embodiments may be all or partially implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

It should be understood that an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It should be understood that, in embodiments of this application, the terminal device and/or the network device may perform a part or all of the steps in embodiments. These steps or operations are merely examples. Other operations or variations of various operations may be further performed in embodiments of this application. In addition, the steps may be performed in a sequence different from a sequence shown in embodiments, and not all of operations in embodiments of this application may be necessarily performed. In addition, the sequence numbers of the foregoing processes do not mean an execution sequence. The execution sequence of the processes should be determined based on functions and internal logic of the processes, and should not constitute any limitation on an implementation process of embodiments of this application.

It should be further understood that, in this application, "when" and "if" mean that UE or a base station performs corresponding processing in an objective situation, but do not constitute any limitation on time, do not require the UE or the base station to perform a determining action during implementation, and do not mean another limitation either.

In addition, the terms "system" and "network" may be used interchangeably in this specification. The term "and/or" in this specification describes only an association relationship between associated objects, and indicates that three relationships may exist. For example, A and/or B may indicate the following three cases: Only A exists, both A and B exist, and only B exists.

It should be understood that, in embodiments of this application, "B corresponding to A" indicates that B is associated with A, and B may be determined based on A. However, it should be further understood that determining B based on A does not mean that B is determined only based on A. B may alternatively be determined based on A and/or other information.

The foregoing content is merely optional embodiments of the technical solutions of this application, but is not intended to limit the protection scope of this application. Any modification, equivalent replacement, improvement, or the like made without departing from the principle of this application shall fall within the protection scope of this application.

## Claims

1. A communication method, comprising:
sending first information, wherein the first information indicates a phase capability of a terminal device; and
sending a first signal on a first resource, wherein the first resource is determined based on the phase capability.

2. The method according to claim 1, wherein the phase capability comprises:
a capability of maintaining phase continuity; or
a capability of maintaining a phase value of a radio frequency link unchanged; or
a capability that an absolute value of a difference between a phase value of a signal sent in a first time unit and a phase value of a signal sent in a second time unit is less than or equal to a first value, wherein the first time unit and the second time unit belong to a first time period.

3. The method according to claim 1 or 2, wherein the phase capability comprises duration of maintaining phase continuity.

4. The method according to claim 3, wherein a time span of the first resource is less than or equal to a time span of the duration.

5. The method according to claim 3 or 4, wherein the first information comprises a first field, and the first field indicates a quantity of at least one time unit comprised in the duration.

6. The method according to any one of claims 1 to 5, wherein the phase capability comprises a capability of maintaining phase continuity after transmit power changes or a transmit power level changes, and/or a transmit power range for maintaining phase continuity.

7. The method according to any one of claims 1 to 5, wherein the phase capability comprises an incapability of maintaining phase continuity after transmit power changes or a transmit power level changes; and
the transmit power or the transmit power level of the terminal device remains unchanged in a time period between a start moment and an end moment of the first resource.

8. The method according to any one of claims 1 to 7, wherein the phase capability comprises a capability of maintaining phase continuity after a signal is received.

9. The method according to any one of claims 1 to 7, wherein the phase capability comprises an incapability of maintaining phase continuity after a signal is received; and
the terminal device is capable of sending only a signal in the time period between the start moment and the end moment of the first resource.

10. The method according to any one of claims 1 to 9, wherein before sending the first signal on the first resource, the method further comprises:
receiving second information, wherein the second information indicates the first resource.

11. The method according to any one of claims 1 to 10, wherein the first signal is used for sensing.

12. A communication method, comprising:
receiving first information, wherein the first information indicates a phase capability of a terminal device;
determining a first resource based on the phase capability; and
receiving a first signal on the first resource.

13. The method according to claim 12, wherein the phase capability comprises:
a capability of maintaining phase continuity; or
a capability of maintaining a phase value of a radio frequency link unchanged; or
a capability that an absolute value of a difference between a phase value of a signal sent in a first time unit and a phase value of a signal sent in a second time unit is less than or equal to a first value, wherein the first time unit and the second time unit belong to a first time period.

14. The method according to claim 12 or 13, wherein the phase capability comprises duration of maintaining phase continuity.

15. The method according to claim 14, wherein a time span of the first resource is less than or equal to a time span of the duration.

16. The method according to claim 14 or 15, wherein the first information comprises a first field, and the first field indicates a quantity of at least one time unit comprised in the duration.

17. The method according to any one of claims 12 to 16, wherein the phase capability comprises a capability of maintaining phase continuity after transmit power changes or a transmit power level changes, and/or a transmit power range for maintaining phase continuity.

18. The method according to any one of claims 12 to 16, wherein the phase capability comprises an incapability of maintaining phase continuity after transmit power changes or a transmit power level changes; and
the transmit power or the transmit power level of the terminal device remains unchanged in a time period between a start moment and an end moment of the first resource.

19. The method according to any one of claims 12 to 18, wherein the phase capability comprises a capability of maintaining phase continuity after a signal is received.

20. The method according to any one of claims 12 to 18, wherein the phase capability comprises an incapability of maintaining phase continuity after a signal is received; and
the terminal device is capable of sending only a signal in the time period between the start moment and the end moment of the first resource.

21. The method according to any one of claims 12 to 20, wherein before receiving the first signal on the first resource, the method further comprises:
sending second information, wherein the second information indicates the first resource.

22. The method according to any one of claims 12 to 21, wherein the first signal is used for sensing.

23. A communication apparatus, comprising:
a module configured to perform the method according to any one of claims 1 to 11, or a module configured to perform the method according to any one of claims 12 to 22.

24. A communication apparatus, comprising:
a processor, configured to execute a computer program stored in a memory, to enable the apparatus to perform the method according to any one of claims 1 to 11, or to enable the apparatus to perform the method according to any one of claims 12 to 22; and
a communication interface, wherein the communication interface is coupled to the processor, and is configured to input or output information.

25. A computer-readable storage medium, wherein the computer-readable storage medium stores a computer program, and when the computer program is executed by a processor, the processor is enabled to perform the method according to any one of claims 1 to 11, or the processor is enabled to perform the method according to any one of claims 12 to 22.

26. A computer program product, wherein when the computer program product is executed by a processor, the method according to any one of claims 1 to 11 is performed, or the method according to any one of claims 12 to 22 is performed.

27. A communication system, comprising a communication apparatus configured to perform the method according to any one of claims 1 to 11, and a communication apparatus configured to perform the method according to any one of claims 12 to 22.
